# EUROPÄISCHE PATENTSCHRIFT

(11) **EP 4 269 320 B1**
(45) Veröffentlichungstag und Bekanntmachung des Hinweises auf die Patenterteilung: **18.11.2026**
(21) Anmeldenummer: 23196459.4
(22) Anmeldetag: 03.02.2020
(51) Int. Cl.: B66F 9/06, B66F 9/075, B66F 9/24

(54) **FÖRDEREINRICHTUNG FÜR LADUNGSTRÄGER**
CONVEYING DEVICE FOR LOAD CARRIERS
DISPOSITIF DE TRANSPORT POUR PORTEURS DE CHARGE

(30) Priorität: 15.02.2019 DE 102019001125; 01.03.2019 DE 102019001455
(43) Veröffentlichungstag der Anmeldung: 01.11.2023
(62) Dokumentnummer(n) der früheren Anmeldung(en) nach Art. 76 EPÜ: 20703222.8 / 3 924 291
(73) Patentinhaber: Filics GmbH, 81379 München (DE)
(72) Erfinder: Lutzer, Johannes Julius, Munich (DE); Kolls, Gregor, Munich (DE)
(74) Vertreter: SSM Sandmair

(56) Entgegenhaltungen:
- DE-A1- 102014 017 254
- DE-A1- 102015 004 330
- DE-A1- 102015 010 718

## Beschreibung

Die Erfindung betrifft eine Fördereinrichtung zum Fördern von beladenen und unbeladenen Ladungsträgern. Die Fördereinrichtung weist eine erste Fördereinheit und eine zweite Fördereinheit auf, wobei beide Fördereinheiten unabhängig voneinander verfahren können.

Die erste und die zweite Fördereinheit können sich dabei jederzeit, eigenständig oder gepaart als Fördereinrichtung, autonom beispielsweise innerhalb einer Halle bewegen. Eine solche Fördereinrichtung ist beispielsweise aus der DE 10 2007 046 868 A1 bekannt, wobei zwei Fördereinheiten eine Fördereinrichtung bilden. Eine derartige Fördereinrichtung ist dazu konzipiert, Ladungsträger, insbesondere Paletten, zu unterfahren, mithilfe einer Hub-/Senkeinheit zu heben, im angehobenen Zustand zu einem Ort zu fördern und wieder abzusetzen. Dabei kann jede Fördereinheit in ihrer Dimension so ausgestaltet sein, dass sie das Lichtraumprofil der Ladungsträger unterfahren kann.

Aus der DE 10 2008 014 877 A1 ist eine weitere beispielhafte Ausführung der Fördereinrichtung bekannt, wobei dieses System das automatische Verladen von Paletten in Lastkraftwagen ermöglicht. Hierzu bilden zwei Transportwagen ein Transportwagenpaar, welche Paletten unterfahren, diese anheben und fördern kann. Eine derartige Fördereinheit ist mit einem elektrischen Zuleitungskabel zur Energieversorgung versehen, wobei das Kabel auch als Zugseil verwendet werden kann, um Fahrwegkorrekturen vorzunehmen.

Ein kabelloses Fördersystem ist für eine uneingeschränkte Flexibilität notwendig. Dazu müssen alle notwendigen Bestandteile der Fördereinheit, eine Steuerungseinheit, mindestens eine Hub-/Senkeinheit, eine Energieversorgung und mindestens eine Antriebseinheit, bestehend aus mindestens einem angetriebenen Rad in jede Fördereinheit integriert werden. Somit ist eine hoch integrierte Bauweise erforderlich.

Für eine derartige Fördereinrichtung ist zwingend eine Kollisionswarnung erforderlich, um in nicht abgeschlossenen oder nicht eingezäunten Bereichen und somit im Umfeld von Personen zu arbeiten. Eine Möglichkeit zur Kollisionswarnung könnten dabei Detektionseinrichtungen sein. Ohne eine solche Detektionseinrichtung ist eine Anwendung wie beispielsweise in Produktions- oder Logistikbetrieben, welche keine Hallenabgrenzung vorgesehen haben, unmöglich. Besonders vorteilhaft ist es, wenn die Kollisionswarnung für jede beliebe Fahrtrichtung vorgesehen ist und somit die gesamte Flexibilität der Fördereinrichtung, beispielsweise das seitliche Verfahren der Fördereinrichtung, genutzt werden kann. Des Weiteren muss eine bodennahe Kollisionswarnung eine hohe Robustheit gewährleisten.

Ferner ist für die flexible Fördereinheit eine Orientierung im Umfeld notwendig. Dafür können verschiedene Leitsysteme vorgesehen werden. Beispielsweise können dafür Bodenmarkierungen verwendet werden, auf welche die Fördereinheit verfährt. Jedoch schränken diese die Flexibilität des Systems erneut stark ein.

Aus der DE 10 2015 010 718 A1 ist eine radarbasierte, richtungsgebundene Detektionseinrichtung für Fördereinheiten einer Fördereinrichtung bekannt. Dieses Dokument offenbart die Merkmale des Oberbegriffs des Anspruchs 1.

Es ist eine Aufgabe der Erfindung eine Fördereinrichtung bereit zu stellen, welche ein flexibles, effektives und gleichzeitig kollisionssicheres Fördern von Ladungsträgern ermöglicht.

### Hierarchische Gleichstellung

Die Aufgabe wird erfindungsgemäß durch das Verfahren gemäß Anspruch 1 und die Fördereinrichtung gemäß Anspruch 15 gelöst. Vorteilhafte Weiterbildungen ergeben sich aus den abhängigen Ansprüchen, der Beschreibung und den Figuren.

Die Aufgabe wird erfindungsgemäß durch ein Steuerungsverfahren für ein Fördersystem zum Fördern von beladenen und unbeladenen Ladungsträgern, in welchem mindestens zwei Fördereinheiten eine Fördereinrichtung bilden, gelöst. Jede Fördereinheit umfasst dabei ein Fahrwerk, mindestens ein Tragelement, welches dazu ausgebildet kraft- und/oder formschlüssig mit einem Ladungsträger verbunden zu werden, mindestens eine Hub-/Senkeinheit zum Heben und Senken des Tragelements, ein Sensorsystem und mindestens ein Antriebsystem, welches mindestens eine Bodenrolle der Fördereinheit antreibt.

Ein Fördersystem kann durch eine Fördereinrichtung gebildet werden. Vorteilhafterweise umfasst ein Fördersystem aber auch den Zusammenschluss einer Vielzahl von Fördereinrichtungen, welche dementsprechend auch eine Vielzahl von Ladungsträger gleichzeitig und/oder unabhängig voneinander fördern können.

Das Steuerungsverfahren ist dadurch gekennzeichnet, dass die Fördereinheiten innerhalb der Fördereinrichtung gleichgestellt sind und jede Fördereinheit ihre Ist-Position, bezogen auf ihre eigene Soll-Bahnkurve selbständig korrigieren. Die Soll-Bahnkurve der jeweiligen Fördereinheit wird bevorzugt aus der Soll-Bahnkurve des Ladungsträgers relativ bestimmt. Dementsprechend werden Fahrparameter, welche in der Steuerung verwendet werden, modifiziert, um auf der vorgesehenen Bahnkurve zu bleiben. Die selbstständige Korrektur der Fördereinheit ist derart definiert, dass die Fördereinheit selbst Information erfasst und/oder zur Verfügung gestellt bekommt und diese Information derart nutzt, um auf der eigen vorhergesehen Bahnkurve zu bleiben und einen Fehler, zwischen Soll-Position und Ist-Position, auszugleichen.

Eine vorteilhafte Ausführungsform basiert auf der Feststellung, dass hohe Ungenauigkeiten der Positionen der jeweiligen Fördereinheiten einer Fördereinrichtung zum Blockieren und somit zum nicht-Fördern des Ladungsträgers führen. Die Ungenauigkeiten beruhen beispielweise auf dem Schlupf der Reifen, welche wiederum aufgrund unterschiedlicher Bodenhaftungen der Bodenrollen entstehen können, welche besonders durch große Lastunterschiede des Ladungsträgers variieren. Diesen Schwierigkeiten gilt es entgegen zu wirken.

Die Gleichstellung der Fördereinheiten innerhalb der gebildeten Fördereinrichtung wird dadurch ermöglicht, dass jeweils beide Fördereinheiten ihre Fahrparameter unabhängig voneinander korrigieren und somit zur Genauigkeit der Fördereinrichtung beitragen. Mit anderen Worten sind die Fördereinheiten hierarchisch gleichgestellt und unterliegen keinem Über- bzw. Unterordnungsverhältnis, wie es bei einer Master/Slave Steuerung der Fall ist.

Eine verbesserte Gleichstellung könnte erreicht werden, indem beide Fördereinheiten sich jeweils zur Bahnkurve des Ladungsträgers orientieren und korrigieren.

Eine Gleichstellung könnte alternativ oder zusätzlich auch derart ausgeführt sein, dass im Falle eines Problems einer Fördereinheit, beispielsweise einer größeren Abweichung von der eigenen Soll-Bahnkurve, beispielsweise aufgrund veränderter Bodeneigenschaften, ein Signal an einen Steuerungsleitrechner, welcher das Fördersystem koordiniert, gesendet wird und dieser Steuerungsleitrechner den beiden gleichstellten Fördereinheiten ein Veränderung der Fahrparameter vorschlägt, beispielweise eine Bremsung, welche von den beiden Fördereinheiten ausgeführt werden kann.

Bei dem Steuerungsleitrechner handelt es sich bevorzugt um eine Vorrichtung zur Datenverarbeitung, insbesondere um einen Computer. Der Steuerungsleitrechner umfasst vorteilhafterweise, aber nicht zwingend, eine Sende- und Empfangseinrichtungen zur Bereitstellung eines oder mehrerer Kommunikationskanäle. Alternativ können auch andere Bauteile des Fördersystems, insbesondere Netzwerkgeräte wie WLAN Router, einen oder mehrere Kommunikationskanäle bereitstellen. Bei der artigen Ausführungsformen kann der Steuerungsleitrechner vorteilhafterweise über den Kommunikationskanal mit den Fördereinheiten kommunizieren, stellt diesen aber nicht selbst bereit.

Bevorzugt handelt es sich bei dem Steuerungsleitrechner um ein zusätzliches Element der Fördereinrichtung und/oder des Fördersystems. Bei vorteilhaften Weiterbildungen kann der Steuerungsleitrechner als externes Bauteil eines Fördereinrichtung ausgebildet sein. Alternativ kann der Steuerungsleitrechner aber auch Bestandteil einer Fördereinheit sein. Ein Fördersystem kann mehrere Steuerungsleitrechner umfassen. Bei einer beispielhaften Ausführungsform umfasst das Fördersystem einen Steuerungsleitrechner.

Ein Kommunikationskanal bezeichnet eine Plattform zum Austausch von Informationen, insbesondere von Daten. Hierbei kann es sich beispielsweise um ein Datennetzwerk, insbesondere ein WLAN Netzwerk, handeln.

Bei einer vorteilhaften Weiterentwicklung des Steuerungsleitrechners ist dieser dazu ausgebildet den einzelnen Fördereinheiten und/oder den Fördereinrichtungen und/oder den Fördereinheitsflotten innerhalb eines Fördersystems Informationen über die aktuelle Position und den Zielort von Ladungsträgern zu übermitteln. Bevorzugt kann der Steuerungsleitrechner auch Soll-Bahnkurven vorschlagen, auf welchen die Fördereinrichtungen die Ladungsträger zum Zielort transportieren könnten.

In einer alternativen Ausführung der Gleichstellung wäre ein direktes Signal an die andere gleichgestellte Fördereinheit der Fördereinrichtung denkbar, woraus ebenfalls eine Änderung der Fahrparameter vorgeschlagen werden kann und gegebenenfalls ausgeführt werden kann.

Eine derartige Gleichstellung bewirkt eine sehr genaue Abstimmung der jeweiligen Fahrwege und ermöglicht somit das blockadefreie Fördern von Ladungsträgern.

Die Orientierung und die Position jeder Fördereinheit wird dabei durch ein Sensorsystem festgestellt, welches mindestens aus einer Sensoreinheit besteht. Die mindestens eine Sensoreinheit ist so an jeder Fördereinheit angeordnet, dass beim Fördern eines Ladungsträgers durch die Fördereinrichtung das gesamte Umfeld erfasst werden kann. Mithilfe geeigneter Methoden, in vorteilhafter Ausführung beispielsweise die SLAM-Methodik (Simultaneous Localization and Mapping), kann sich jede Fördereinheit innerhalb des Raumes orientieren und/oder lokalisieren.

Eine besonders vorteilhafte Ausführung liegt vor, wenn die Sensoreinheit eine laserlichtbasierte Sensorik ist, welche durch hohe Abtastraten und Echtzeitfähigkeit eine sehr genaue Ortung ermöglicht.

In besonders vorteilhafter Ausführung bilden mindestens zwei Sensoreinheiten ein Sensorsystem. Dabei könnte vorgesehen sein, dass die Sensoreinheiten punktsymmetrisch oder spiegelsymmetrisch zum Mittelpunkt der Fördereinheit angeordnet sind. Dadurch können die Fördereinheiten orientierungsunabhängig vom Steuerungsverfahren angesteuert werden. Dies hat zur Folge, dass zeit-ineffiziente Drehungen der Fördereinheiten um 180 Grad, zur Ausrichtung in die Fahrtrichtung der Fördereinheit, welche zuvor falsch ausgerichtet war, vermieden werden. Folglich reduziert das erfindungsgemäße Steuerungsverfahren Gefährdungen durch Vermeidung von nicht notwendigen Bewegungen.

Besonders vorteilhaft ist es, wenn jede Fördereinrichtung selbstständig Ihre Bahnkurve berechnet und ihre Fahrparameter derart bestimmt, dass die Fördereinheiten auf dem Soll-Bahnkurve bleiben. Die Fahrparameter sind dabei als die Größen definiert, welche in der Steuerung verwendet werden. In vorteilhafter Ausführung kann dies mit dem Ansatz der differentiellen Flachheit gelöst werden. In diesem Ansatz werden die geometrischen Gegebenheiten, die relative Anordnung der Bodenrollen innerhalb der Fördereinheit zueinander, sowie eine geschickte Annahme von den Verhältnissen der Fahrparameter zueinander, dazu genutzt, direkt die Fahrparameter, wie beispielsweise Lenkwinkel und Bodenrollendrehzahl, aus der Soll-Bahnkurve zu bestimmen. Diese bestimmten Sollwerte könnten durch eine Ist-Werteerfassung von dem Lenkwinkel und Raddrehzahl mithilfe einer stabilen Fehlerdynamik zurückgeführt werden, sodass die jeweilige Bahnkurve, angesichts der Bahnkurve des Ladungsträgers, robust, sicher und genau gefolgt werden kann.

Des Weiteren ist es vorteilhaft, wenn bei Kurvenfahrten der Momentanpol der Fördereinheit, der Punkt, um welchem die Fördereinheit sich dreht, bestimmt werden kann und anschließend der Abstand der Bodenrollen zu diesem Momentanpol genutzt werden kann, um die Sollwerte der Fahrparameter der Fördereinheiten rechnerisch zu korrigieren.

In vorteilhafter Ausführung der zu steuernden Fördereinheit umfasst das Antriebssystem jeder Fördereinheit mindestens eine Antriebseinheit. Eine Antriebseinheit weist vorteilhafterweise eine Bodenrolle auf, welche bevorzugt um die Hochachse der Antriebseinheit drehbar gelagert ist. Eine Antriebseinheit ist bevorzugt ein Element mit einem Antriebsmotor und/oder einer Bremse für die Bodenrolle. In dieser Ausführung kann das Steuerungsverfahren die Fördereinheiten in jede beliebige Fahrrichtung durch die Ausrichtung aller Bodenrollen in jene Fahrtrichtung, sowie die Synchronisation und gleichen Antrieb der Bodenrollen, verfahren. Somit ist die Orientierung der Fördereinheiten unabhängig von der Fahrtrichtung. Dies ermöglicht besonders das Verfahren auf engerem Raum, beispielsweise in schmalen Gassen in einer Lagerhalle.

In vorteilhafter Ausführung der Fördereinheit sind die Antriebseinheiten frei und unabhängig voneinander drehbar. Dadurch ist ein seitliches Verfahren, senkrecht zur Längsachse der Fördereinheit möglich. Da jedoch ein dauerhaftes Fördern in diese Fahrtrichtung aufgrund geringerer Kippstabilität nicht erwünscht ist, muss eine Drehung eingeleitet werden. In bekannten, bewährten Steuerungsverfahren wird dies durch eine Drehung auf der Stelle gelöst, welches im gleichen Zuge die Flexibilität der Fördereinrichtung stark einschränkt.

Diesem Nachteil kann durch das vorteilhafte Steuerungsverfahren entgegengewirkt werden. Durch eine Bodenrollendrehzahldifferenz einer Antriebsseite der Fördereinrichtung, beispielsweise der linken Antriebsseite der Fördereinrichtung, kann im Vergleich zur anderen Antriebsseite der Fördereinrichtung, beispielsweise der rechten Antriebsseite der Fördereinrichtung, eine Drehung eingeleitet werden. Eine derartige Drehung ermöglicht eine weiche, materialschonenden Überlagerung von zwei Bewegungen, namentlich einer translatorischen Bewegung und einer rotatorischen Bewegung. Zugleich zieht eine derartige Steuerung ein schnelleres Förderverhalten der Fördereinrichtung als bei bisher bekannten Fördereinrichtungen nach sich, da bisher die rotatorische Bewegung und die translatorische Bewegung seriell erfolgten, also hintereinander weg geschalten waren.

Bei einer beispielhaften Ausführungsform sind die Fördereinheiten identisch aufgebaut und führen alle Berechnungsschritte zur Durchführung des Steuerungsverfahrens, insbesondere die Korrektur der jeweiligen Ist-Position und/oder die Relativbestimmung der Soll-Bahnkurve aus der Soll-Bahnkurve des Ladungsträgers, zeitgleich durch. Dies bewirkt vorteilhafterweise, dass beispielsweise die erste Fördereinheit einer Fördereinrichtung ihre Fahrparameter zur Förderung eines Ladungsträgers unabhängig von der zweiten Fördereinheit berechnet und umsetzt. Selbiges gilt analog für die zweite Fördereinheit, wobei die beiden Fördereinheiten aufgrund des identischen Aufbaus den Ladungsträger in gleichgestellter Weise transportieren, ohne dass Fahrparameter zwischen den Fördereinheiten ausgetauscht werden müssen.

Bei einer vorteilhaften Weiterentwicklung der Steuerungsverfahrens, können mehrere Ladungsträger durch mehrere Fördereinrichtungen gleichzeitig befördert werden. Die einzelnen Fördereinrichtungen bilden dabei ein gemeinsames Fördersystem. Bevorzugt können die einzelnen Fördereinheiten der jeweiligen Fördereinrichtungen innerhalb des Fördersystems variabel eingesetzt werden. Mit anderen Worten bildet eine erste Fördereinheit nicht zwingend immer mit der gleichen zweiten Fördereinheit ein und dieselbe Fördereinrichtung in einem Fördersystems. Vielmehr können die Fördereinheiten flexibel eingesetzt werden, so dass eine Fördereinrichtung immer aus unterschiedlichen Fördereinheiten gebildet werden kann.

Ein weiterer Vorteil des Steuerungsverfahrens betrifft die Auswahl der Fördereinheiten, welche zu einer Fördereinrichtung zusammengeführt werden und einen Ladungsträger befördern sollen. In klassischen Steuerungsverfahren werden die Fördereinheiten über die Distanz, von dem Mittelpunkt der Fördereinheit zum Ladungsträger, bestimmt. Jedoch kann diese Wahl, bezogen auf eine bestmögliche Auslastung des Fördersystems zum zeitnahen Befördern von möglichst vielen Ladungsträgern, unvorteilhaft sein.

Dieser Nachteil des Fördersystems wird durch das vorgeschlagene Steuerungsverfahren gelöst. Beispielsweise können die Fördereinheiten für einen neuen Förderauftrag derart ausgewählt werden, dass der Zustand der Fördereinheiten im gleichen Maße berücksichtigt wird, wie die Distanz zum Ladungsträger, insbesondere der Zeit bis zum Erreichen des Ladungsträgers. Der Zustand einer Fördereinheit kann dabei insbesondere durch die Energiekapazität des Energieträgers, in beispielhafter Ausführung der Ladezustand einer Batterie, und/oder durch den Verschleiß der Fördereinheit selbst, beispielsweise der Verschleiß der Antriebseinheiten, bestimmt sein. Diese vorteilhafte Berücksichtigung hat zufolge, dass alle Fördereinheiten eines Fördersystems gleichverteilt und somit nachhaltiger ausgelastet sind.

Ein Förderauftrag beschreibt den Transport eines Ladungsträgers durch eine Fördereinrichtung von einer ersten Position zu einer zweiten Position. Dabei ist die erste Position, insbesondere ein erster Lagerplatz des Ladungsträgers, eine Position im Raum welche ungleich der zweiten Position, insbesondere einem zweiten Lagerplatz des Ladungsträgers, ist.

Ferner kann durch das Steuerungsverfahren vorgesehen sein, dass mindestens zwei Förderaufträge derart ausgeführt werden können, dass das Steuerungsverfahren die beiden Förderaufträge gemeinsam bearbeiten kann und eine vorteilhafte Kolonnenfahrt vorschlagen kann. Eine derartige Kolonnenfahrt ermöglicht einen raumeffizienten Transport von mindestens zwei Ladungsträgern und strukturiert den Transport derart, dass Gefahren von allein umherfahrenden Ladungsträgern und einer Unübersichtlichkeit reduziert werden. Des Weiteren können dadurch priorisierte Förderaufträge gemeinsam abgearbeitet werden. Einen Kolonnenfahrt ist derart definiert, dass sich mindestens 2 Fördereinheiten, welche aufgrund beispielsweise ähnlicher Zielorte und/oder Bahnkurven in ähnliche Richtungen verfahren, voneinander Wissen und hintereinander herfahren. Bei einer vorteilhaften Ausführung der Kolonnenfahrt wäre es denkbar, dass in diesem Fall der Abstand zwischen mindestens zwei Fördereinrichtungen verringert werden kann. Ein derartiger Zusammenschluss von Ladungsträger transportierenden Fördereinrichtungen kann innerhalb des Fördersystems auch als Fördereinheitsflotte bezeichnet werden.

Bei einer Fördereinheitsflotte können mindestens zwei Fördereinrichten derart hintereinander verfahren, dass die hintere Fördereinheit Informationen drahtlos von der vorderen Fördereinheit empfängt, um der Bahnkurve, welche die vorausfahrende Fördereinheit zuvor gefahren ist, besser zu folgen. Dieses wird ermöglicht, indem die gleichgestellten Fördereinheiten der ersten, vorderen Fördereinheit, jeweils der gleich positionierten Fördereinheiten der hinterherfahrenden Fördereinrichtungen Informationen zur Verfügung stellen. Das Steuerungsverfahren kann in diesem Fall eine direkte Kommunikation zwischen zwei, hintereinander herfahrenden Fördereinheiten vorsehen.

Bei einer besonders bevorzugten Ausführungsform des Steuerungsverfahrens handelt es sich bei der Gleichstellung der Fördereinheiten um eine Gleichstellung auf funktionaler Ebene (funktionale Gleichstellung). Die funktionale Gleichstellung basiert auf einer identischen Bauweise der Fördereinheiten des Fördersystems.

Die funktionale Gleichstellung ist derart definiert, dass beide Fördereinheiten zu Genauigkeit der Fördereinrichtung beitragen, welche somit die Soll-Bahnkurve im Förderzustand exakter abfahren kann. Der Förderzustand ist jener Zustand, in welchem zwei Fördereinheiten gemeinsam einen Ladungsträger angehoben haben und ihn anschließend verfahren können.

Bei der funktionalen Gleichstellung erfolgt die Erhöhung der Präzision vorzugsweise über ein Netzwerk, aus welchem alle Fördereinheiten als Zuhörer "lauschen" können. Das Netzwerk umfasst einen Kommunikationskanal, in welchen jede Fördereinheit Informationen einspeisen kann. In einer möglichen Ausführung der Erfindung kann der Kommunikationskanal durch einen Steuerungsleitrechner bereitgestellt werden.

Der Begriff "Informationen" beschreibt bevorzugt alle erfassten Daten und/oder Transportprozessparameter, welche die Genauigkeit des Verfahrens der Fördereinheit beeinflussen. Beispielsweise könnten diese Information das Spannungslevel des Energieträgers, Halleninformationen oder aktuelle Gewichtsverteilung der Ladungsträger sein.

Bei einer möglichen Ausführungsform des Steuerungsverfahrens ist jedoch der Informationsursprung, sprich welche Fördereinheit den Informationsbeitrag geleistet hat, unerheblich. Bei der funktionalen Gleichstellung kann somit jede Fördereinheit gleichermaßen Informationen zur verbesserten Bahnkurve - Abfolge empfangen, als auch beitragen. Mithin ist es möglich, dass jede Fördereinheit Informationssender und im nächsten Schritt auch Informationsempfänger sein kann, ohne davon zu wissen.

Eine vorteilhafte Weiterbildung des Steuerungsverfahrens ermöglicht, dass die Informationen, welche relevant für eine hohe Positionsgenauigkeit des Transportprozesses sind, geteilt und jeder Fördereinheit im gleichen Maß zur Verfügung gestellt werden. Somit gelangen, bei einem bevorzugten Steuerungsverfahren, die "besten" Sensordaten der einzelnen Fördereinheiten der Fördereinrichtung und/oder der Fördereinheitsflotte zu jeder Fördereinheit, die mit den zur Verfügung gestellten Daten ihre eigene Ist-Position bestmöglich auf die eigene Soll-Position korrigieren kann.

Vorteilhafterweise kann die funktionale Gleichstellung auf zweifacher, sogar mehrfacher Ebene umgesetzt sein. Zum einen kann ein Fördersystem, bestehend aus mehreren Fördereinheiten, Informationen über Teilbereiche der Halle verteilen (Sub-Schwarmintelligenz). Zum anderen kann es alternativ oder zusätzlich auch zur Informationsverteilung innerhalb einer einzelnen Fördereinrichtung kommen. Derartige Ausführungen ermöglichen auch eine Gleichstellung auf Fördereinrichtungsebene und/oder Fördersystemebene, bei welcher Informationen zu Umgebung weitergeben werden könnten.

Bei einer vorteilhaften Ausführungsform des Steuerungsverfahrens kann somit auch jede Fördereinrichtung Informationsgeber und gleichzeitig Informationsempfänger sein, ohne dass ein Rollenwechsel der Fördereinheiten notwendig ist, wenn beispielsweise eine Sensoreinheit einer Fördereinheit ausfällt.

In einer weiteren vorteilhaften Ausführung kann für jede Fördereinheitsflotte ein weiterer Kommunikationskanal bereitgestellt werden. Zusätzlich oder alternativ kann innerhalb des bereits vorhandenen Kommunikationskanal eine Spezifizierung erfolgen, um lediglich Informationen bezogen auf die jeweilige Fördereinheitsflotte innerhalb des Fördersystems zu teilen. Somit muss jede Fördereinheit nur die für sie relevanten Informationen auswerten.

In einer vorteilhaften Ausführung mit nur einem Kommunikationskanal ist es denkbar, dass Headerinformationen dazu verwendet werden, um die Zugehörigkeit der Information zu einer bestimmten Fördereinrichtung und/oder Fördereinheitsflotte zu beschränken. Eine Headerinformation kann dabei beispielsweise als Hashtag definiert sein, auf welchem die Fördereinrichtungsnummer, Typ der Information und eine Zahl folgt.

In einer weiteren vorteilhaften Ausführung mit mehreren Kommunikationskanälen ist es denkbar, dass auf Headerinformationen verzichtet wird und lediglich die Information selbst übertragen wird. Als beispielhafte Ausführung ist ein Netzwerk-Router mit mehreren Ports denkbar.

Bei einer vorteilhaften Weiterentwicklung des Steuerungsverfahrens können die empfangenen Informationen auch zur Umplanung von Bahnkurven führen.

Bei beispielhaften Weiterentwicklungen könnten die geteilten Informationen nicht nur innerhalb des Kommunikationskanals bzw. der Kommunikationskanäle abgebildet sein. Aufgrund der kompakten Bauweise der Fördereinheiten könnte es dazu kommen, dass die Vielzahl an Informationen nicht mehr lokal innerhalb der Fördereinheit ausgewertet werden können. In diesem Fall könnte der Kommunikationskanal nicht nur als Plattform zur Bereitstellung der Informationen ausgebildet sein, sondern die Informationen vorab auch weiterverarbeiten, um sie dann in geänderter Form bereitstellen zu können. Vorteilhafterweise könnte die Rechenleistung einer Fördereinheit dann zum Teil oder in Gänze an den Kommunikationskanal ausgelagert werden.

Weitere Merkmale und Vorteile der Erfindung ergeben sich aus der nachfolgenden Beschreibung von Ausführungsbeispielen und anhand der Zeichnungen. Die Zeichnungen zeigen:
- Figur 1: eine perspektivische Ansicht eines ersten Ausführungsbeispiels einer Fördereinrichtung, welche vor der Einfahrt in einen Ladungsträger dargestellt ist;
- Figur 2: eine schematische Draufsicht auf eine Fördereinheit der Fördereinrichtung des ersten Ausführungsbeispiels;
- Figur 3: eine weitere Ansicht des Ausführungsbeispiels aus Figur 2;
- Figur 4: eine schematische Seitenansicht der Fördereinheit im nicht-gehobenen Zustand mit einer Detektionsebene;
- Figur 5: eine schematische Seitenansicht der Fördereinheit im gehobenen Zustand mit einer Detektionsebene;
- Figur 6: eine schematische Seitenansicht der Fördereinheit unterhalb eines Ladungsträgers, welcher sich im nicht-gehobenen Zustand befindet;
- Figur 7: eine schematische Seitenansicht der Fördereinheit unterhalb eines Ladungsträgers, welcher sich im gehobenen Zustand befindet;
- Figur 8: eine schematische Draufsicht auf das erste Ausführungsbeispiel der Fördereinrichtung mit einem Ladungsträger;
- Figur 9: eine weitere schematische Draufsicht auf die Fördereinheit;
- Figur 10: eine schematische Draufsicht auf das erste Ausführungsbeispiel der Fördereinrichtung, welche sich im Einfahrtprozess befindet;
- Figur 11: eine weitere schematische Draufsicht auf das erste Ausführungsbeispiel der Fördereinrichtung, welche sich im Einfahrtprozess befindet und bereits den Ladungsträger zum Teil unterfahren hat;
- Figur 12: eine schematische Draufsicht auf das erste Ausführungsbeispiel der Fördereinrichtung, welche einen Ladungsträger in der Draufsicht nach rechts hin transportiert;
- Figur 13: eine schematische Draufsicht auf das erste Ausführungsbeispiel der Fördereinrichtung, in welchem eine Fördereinheit eine Bremsung aufgrund einer detektierten Kollision ausgelöst hat;
- Figur 14: eine weitere schematische Draufsicht auf das erste Ausführungsbeispiel der Fördereinrichtung mit eingezeichneten Bahnkurven der Fördereinheiten;
- Figur 15: eine der Fig. 14 entsprechende, weitere Draufsicht auf das erste Ausführungsbeispiel der Fördereinrichtung mit eingezeichneten Erfassungsbereichen des Sensorsystems;
- Figur 16: eine der Fig. 15 entsprechende, weitere Draufsicht auf das erste Ausführungsbeispiel der Fördereinrichtung mit alternativer Bahnkurve;
- Figur 17: eine weitere schematische Draufsicht auf das erste Ausführungsbeispiel der Fördereinrichtung, welche sich senkrecht zur Längsachse der Fördereinheiten bewegen möchte;
- Figur 18: eine weitere schematische Draufsicht auf das erste Ausführungsbeispiel der Fördereinrichtung, in welcher sich die Fördereinrichtung, nach einem Förderstart senkrecht zur Längsachse der Fördereinheiten, dreht;
- Figur 19: eine schematische Draufsicht auf einen Wartebereich eines Fördersystems, welches mehrere Fördereinrichtungen des ersten Ausführungsbeispiels umfasst;
- Figur 20: eine schematische Draufsicht auf einen Lagerbereich, wobei eine Fördereinheit auf dem Rückweg in den Wartebereich ist;
- Figur 21: eine der Figur20 entsprechende Ansicht auf den Lagerbereich, wobei ein neuer Förderauftrag zur Wahl von zwei Fördereinheiten führt und die Bahnkurven der Fördereinheiten berechnet werden;
- Figur 22: eine der Figur 20 entsprechende Ansicht auf den Lagerbereich, wobei ein neuer Förderauftrag von zwei Fördereinheiten ausgeführt werden soll;
- Figur 23: eine der Figur 20 entsprechende Ansicht auf den Lagerbereich, wobei zwei neue Förderaufträge sich auf zwei hintereinander befindlichen Ladungsträgern bezieht und dementsprechend gemeinsam ausgeführt werden können;
- Figur 24: eine schematische Draufsicht auf ein zweites Ausführungsbeispiel der Fördereinrichtung.

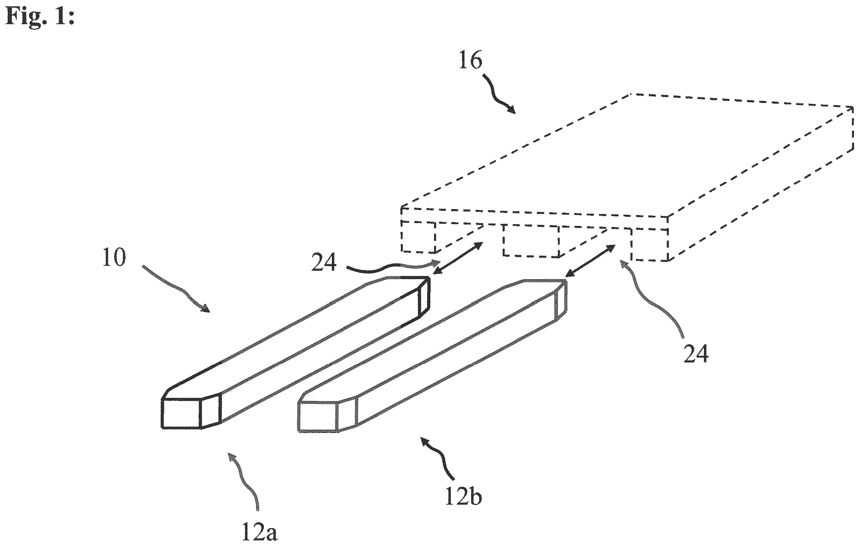

Fig. 1 zeigt eine Fördereinrichtung (10), bestehend aus zwei unabhängigen Fördereinheiten (12). Beide Fördereinheiten (12) fahren unter den Freilichtraum (24) des Ladungsträgers (16), welcher in diesem Fall in Form einer Palette dargestellt ist. Jede Fördereinheit (12) der Fördereinrichtung (10) kann den Ladungsträger (16) durch eine Hub-/Senkeinrichtung anheben und den Ladungsträger (16) im angehobenen Zustand zu einem Zielort verfahren.

Die nicht dargestellte Hub-/Senkeinheit ist für das Anheben und Absenken eines Tragelementes vorgesehen und kann unabhängig vom Antriebssystem der jeweiligen Fördereinheit (12) arbeiten. Es ist denkbar, dass das Tragelement im Querschnitt als T- Profil oder L-Profil ausgeprägt ist.

Das nicht dargestellte Antriebssystem besteht aus mindestens einem Antriebsmodul, welches mindestens eine Bodenrolle der jeweiligen Fördereinheit frei und unabhängig antreibt. Das Antriebssystem und/oder jedes Antriebsmodul kann vorteilhafterweise auch eine Lenkeinheit umfassen, mittels welcher eine Lenkbewegung der jeweiligen Fördereinheit gesteuert werden kann.

Mindestens zwei Fördereinheiten bilden eine Fördereinrichtung, wobei sich jeweils zwei beliebige Fördereinheiten zu einer Fördereinrichtung synchronisieren können.

Jede Fördereinheit (12) kann frei und unabhängig von der jeweils anderen Fördereinheit (12) verfahren. Somit kann jede Fördereinheit (12) sich eigenständig bewegen und bei einem Förderauftrag sich an einer beliebigen Stelle mit einer beliebigen anderen Fördereinheit eines Fördersystems zu einer Fördereinrichtung (10) synchronisieren.

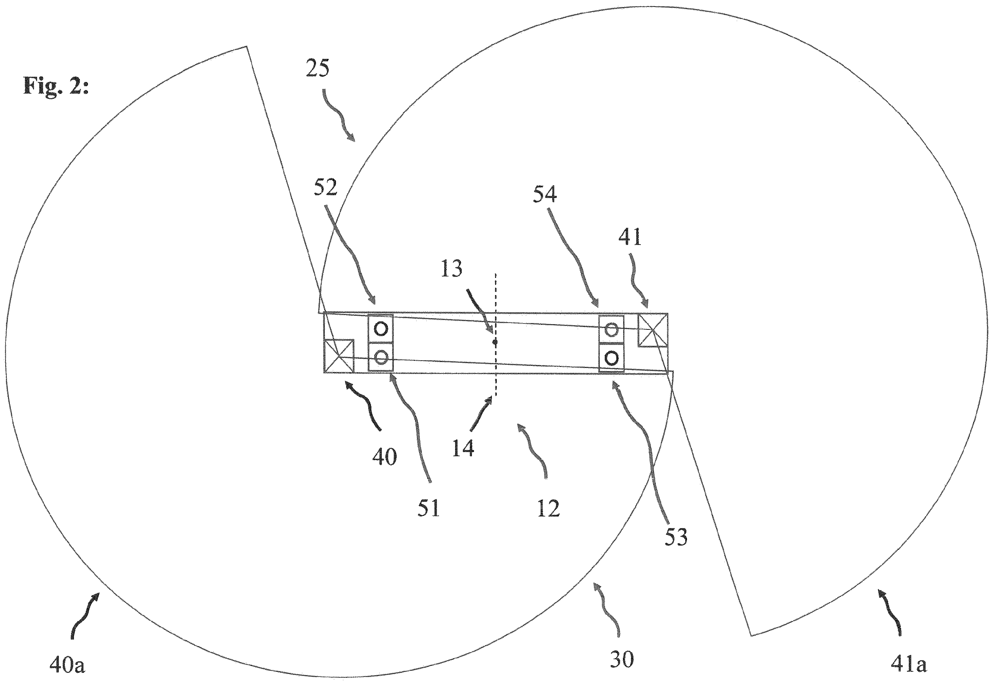

Fig. 2 zeigt die Fördereinheit (12) schematisch von oben. Eine Fördereinheit (12) besitzt im dargestellten Ausführungsbeispiel mindestens zwei Sensoreinheiten (40, 41), welche gemeinsam ein Sensorsystem (25) bilden. Die jeweiligen Detektionsbereiche der Sensoreinheiten (40, 41) sind in Fig. 2 dargestellt und durch die Bereiche (40a) und (41a) gekennzeichnet. Die überlagerten Bereiche werden von beiden Sensoreinheiten (40, 41) erfasst. Des Weiteren ist das Antriebssystem (30) eingezeichnet, welches im gezeigten Ausführungsbeispiel aus vier einzelnen Antriebseinheiten (51, 52, 53, 54) besteht. In bevorzugter Bauweise umfasst jede dieser Antriebseinheiten jeweils eine Bodenrolle, welche um eine Hochachse frei drehbar ist. Bei der Hochachse handelt es sich bevorzugt um die vertikale Mittelachse der jeweiligen Antriebseinheit (51, 52, 53, 54).

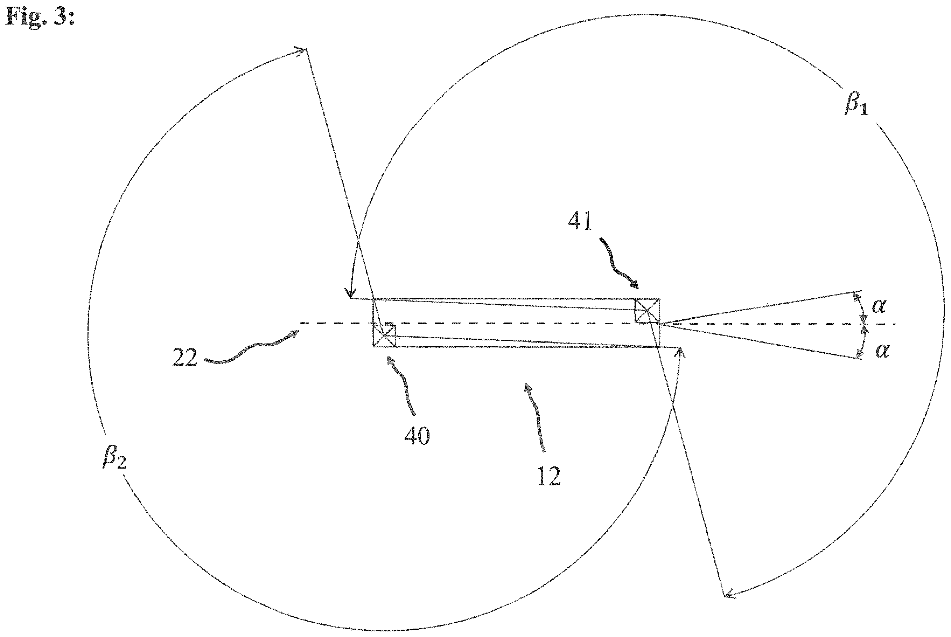

Fig. 3 zeigt die Sensoreinheiten (40, 41) des Sensorsystems (25) innerhalb der Fördereinheit (10), wobei in diesem Fall auch die Längsachse (22) der Fördereinheit (10) dargestellt ist. Der Mindestdetektionswinkel (α) ist dabei ausgehend von der Längsachse (22) eingezeichnet. Jener Mindestdetektionswinkel (α) ist bevorzugt größer 5°. Ebenso ist der Raumwinkelerfassungsbereich (β) jeder Sensoreinheit (40, 41) eingezeichnet, welcher im dargestellten Ausführungsbeispiel ca. 260° beträgt. Es ist denkbar, dass die Sensoreinheiten (40, 41) als optische Sensoreinheiten (40, 41), insbesondere als Laserscanner (40, 41) ausgebildet sind.

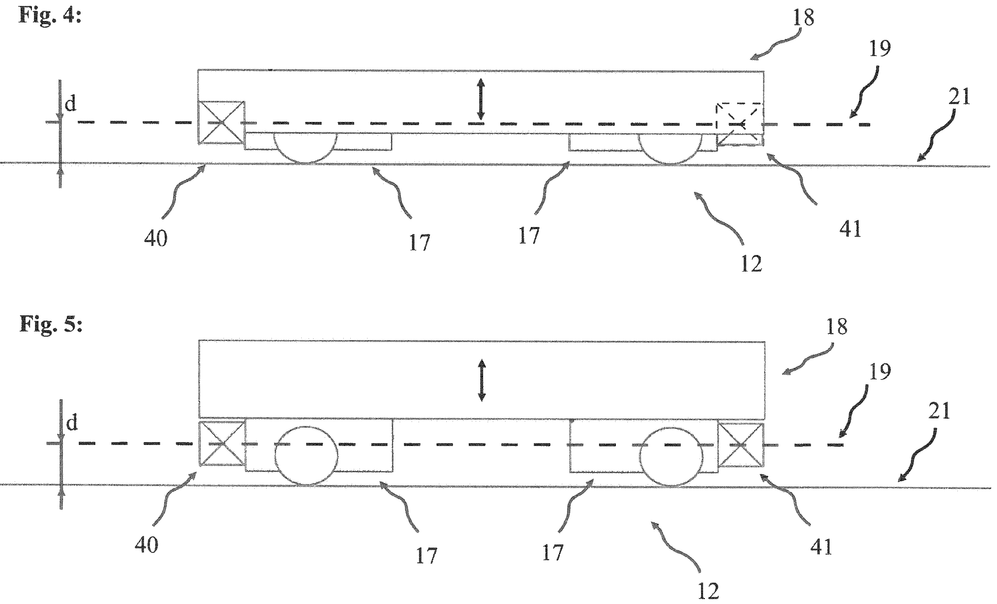

Fig. 4 zeigt die Fördereinheit (12) in der Seitenansicht im nicht-gehobenen Zustand. Der Abstand zwischen der Detektionsebene (d), die im dargestellten Ausführungsbeispiel parallel zum Boden (21) verläuft, sollte weniger als 20 cm betragen. Das Trägerelement (18) kann, durch die nicht dargestellte Hub-/Senkeinheit vertikal zum Boden (21) verfahren werden. Beispielhaft sind in Fig. 4 außerdem zwei Antriebseinheiten (17) eines Antriebssystems (30) eingezeichnet.

Fig. 5 zeigt die Fördereinheit (12) in der Seitenansicht im gehobenen Zustand. Im gezeigten Ausführungsbeispiel befindet sich das Tragelement (18) oberhalb der Detektionsebene (19).

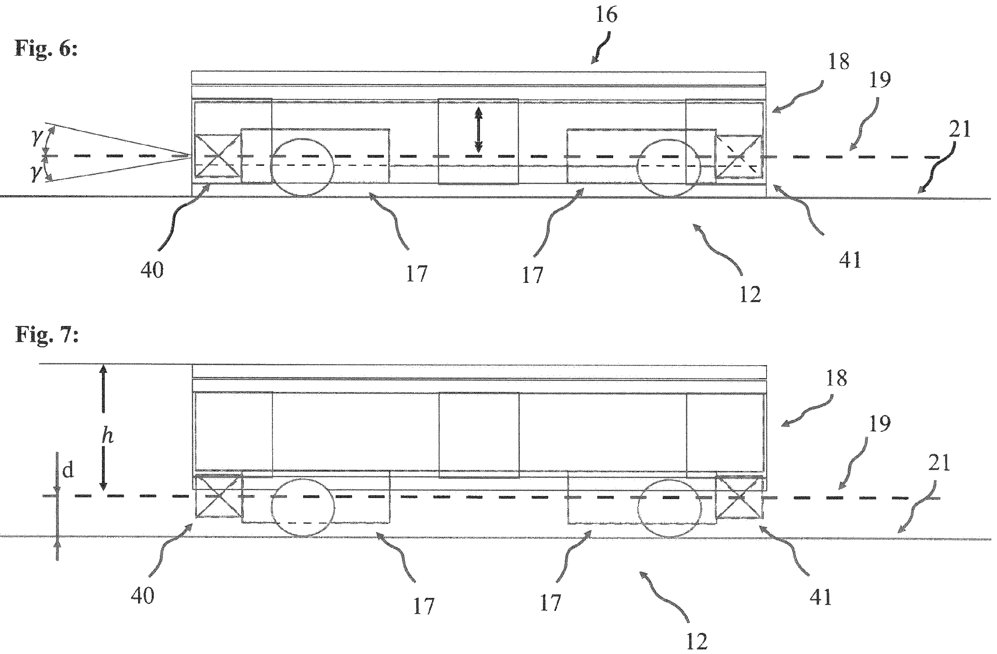

Fig. 6 zeigt anhand einer schematischen Seitenansicht die Fördereinheit (12), wobei diese sich im nicht-gehobenen Zustand befindet. Die Detektionslinie (19) der Sensoreinheiten (40, 41) kann, bezogen auf eine horizontale Ebene, um den Winkel (γ) bis 5° angewinkelt sein. Im dargestellten Ausführungsbeispiel beträgt der Winkel 0°. Die Detektionsebene (19) ist somit parallel zum Boden (21). In einer vorteilhaften Ausführung schneidet die Detektionslinie (19) den Ladungsträger (16) im nicht-gehobenen Zustand.

Fig. 7 zeigt eine schematische Seitenansicht die Fördereinheit (12) im gehobenen Zustand. In diesem Zustand, gegenteilig zu Figur 6, schneidet die Detektionsebene (19) den Ladungsträger nicht mehr. Die Distanz (h), zwischen der Oberkante des Ladungsträgers (16) und der Detektionsebene (19), sollte größer als 10 cm sein. Es ist dazu denkbar, dass die Sensoreinheiten (40, 41) bei einer vorteilhaften Ausführung an vertikal unbewegten Komponenten, beispielsweise dem Fahrwerk, befestigt sind.

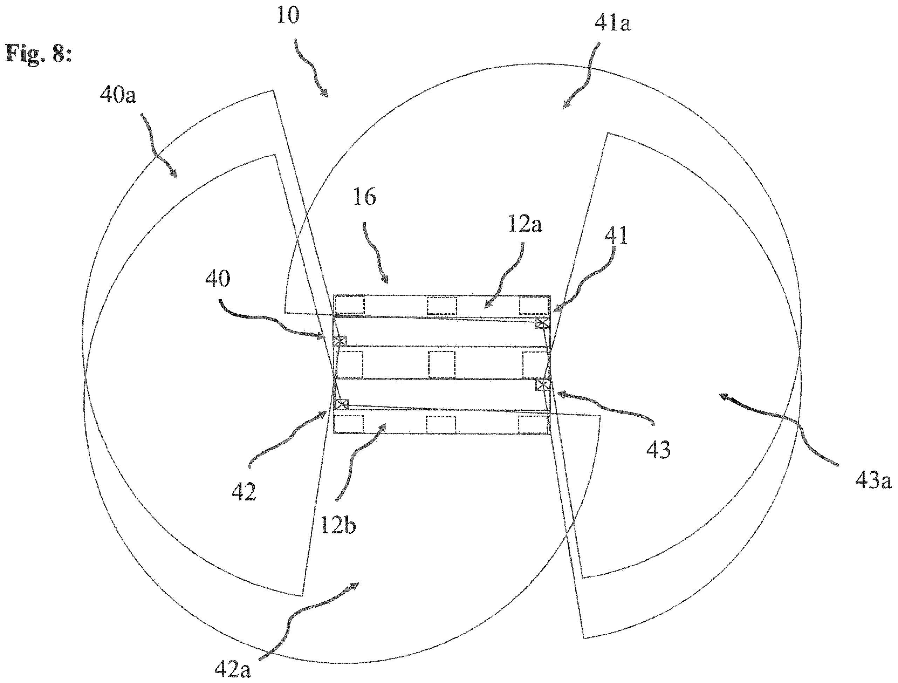

Fig. 8 zeigt eine Draufsicht auf eine Fördereinrichtung (10) mit aufgenommen Ladungsträger (16). Im dargestellten Ausführungsbeispiel ist die Fördereinrichtung (10) mit zwei Sensorsystemen (25), nämlich pro Fördereinheit (12) ein Sensorsystem (25), mit jeweils zwei Sensoreinheiten (40,41 und 42, 43) versehen. Diese Sensoreinheiten erfassen das Umfeld in den eingezeichneten Erfassungsbereichen (40a-43a). Durch die Kombination der einzelnen Erfassungsbereiche (40a-43a) ist es möglich das Umfeld in seiner Gesamtheit, also über einem Gesamterfassungsbereich von 360°, zu erfassen.

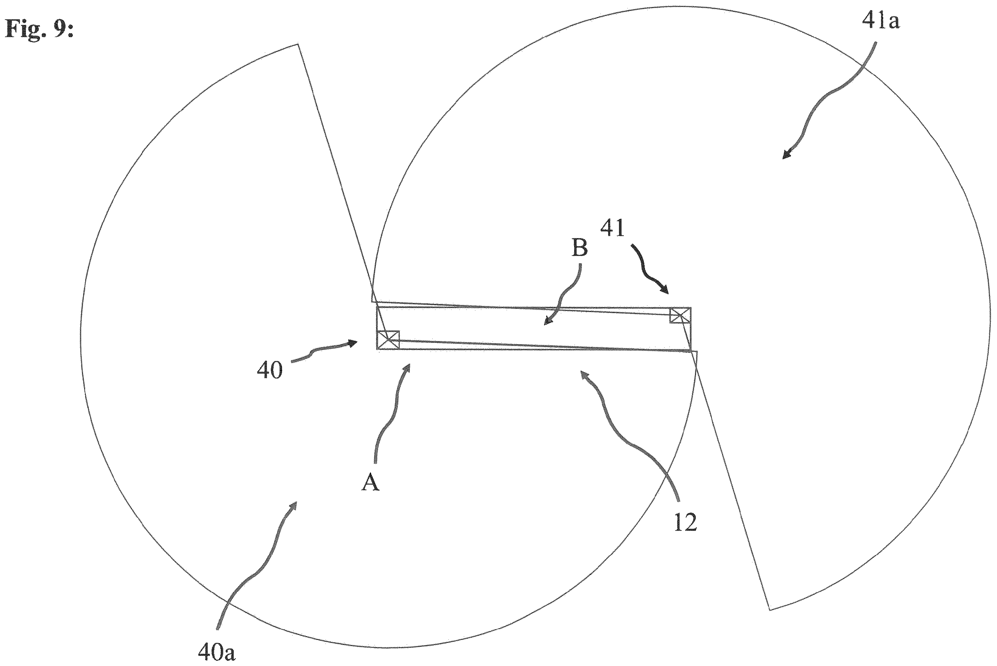

Fig. 9 zeigt eine Draufsicht auf eine Fördereinheit (12), welche zwei Sensoreinheiten (40, 41) aufweist. Dabei ist die Grundfläche (A), eine vertikal projizierte Fläche des Freilichtraums des Ladungsträgers auf den Boden, eingezeichnet. In der dargestellten Ausführung entspricht die Grundfläche der Fördereinheit (12) nahezu der Grundfläche (A) des Freilichtraums. Zudem ist die nicht-detektierte Fläche (B) eingezeichnet. Diese Fläche (B) ist von Erfassungsbereichen (40a) und (41a) eingeschlossen und in der Grundfläche A enthalten. In der beispielhaften Ausführung entspricht die Fläche (B) der Form eines Parallelogramms.

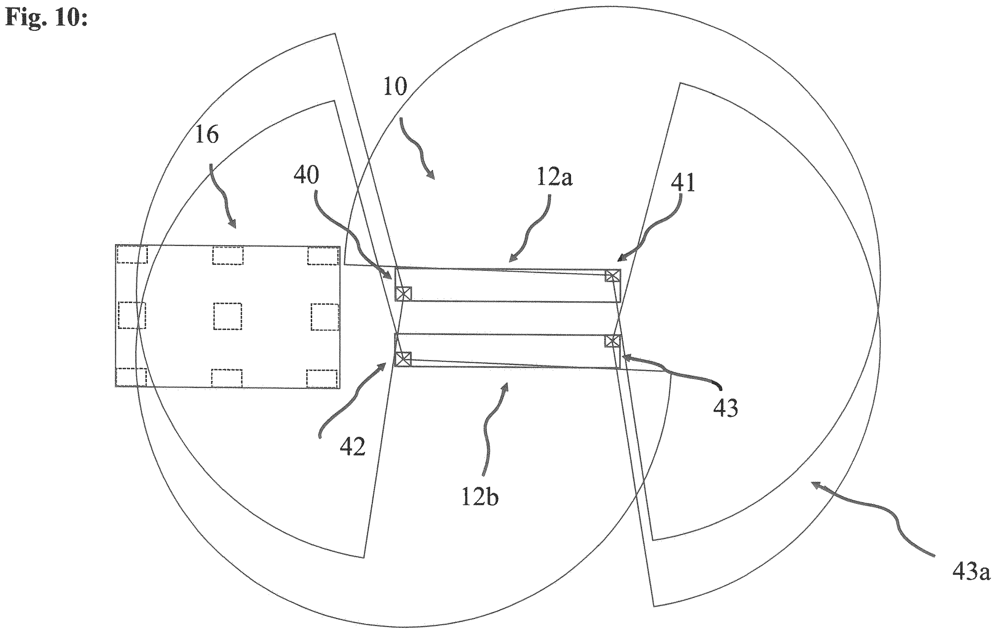

Fig. 10 zeigt eine Draufsicht auf eine Fördereinrichtung (10), welche aus zwei unabhängigen Fördereinheiten (12a, 12b) besteht und sich im Einfahrtprozess unterhalb des Ladungsträgers (16) befindet. Im Einfahrtprozess wird dabei zwischen einer der Fahrtrichtung zugewandten Seite und einer der Fahrtrichtung abgewandten Seite unterschieden. Im gezeigten Ausführungsbeispiel sind die Sensoreinheiten (40, 42) der sogenannten vorderen - der Fahrtrichtung zugewandten - Seite zugeordnet, die Sensoreinheiten (41, 43) der hinteren - der Fahrtrichtung abgewandten - Seite zugeordnet. Während des Einfahrtprozesses können die Sensoreinheiten (40, 42) jeweils einzeln, als auch kombiniert miteinander, den Ladungsträger (16) erfassen. In einer besonders vorteilhafter Ausführungsformen können Steuersysteme der Fördereinheiten (12) und/oder die Sensoreinheiten (40, 41, 42, 43) die Position und die Orientierung der jeweiligen Fördereinheit (12) relativ zum Ladungsträger (16) aus den erfassten Umgebungsparametern berechnen. In einer vorteilhaften Weiterbildung können die Sensoreinheiten (41, 43) auf der Fahrtrichtung abgewandten Seite zeitgleich zu den Sensoreinheiten (40, 42) charakteristische Merkmale der Umgebung erfassen und ermöglichen somit die Lokalisierung im Raum. Auf Basis aller erfassten Umgebungsparameter kann bestenfalls die Position der Fördereinheit im Raum, als auch ihre relative Position und Orientierung zum Ladungsträger zeitgleich ermittelt werden.

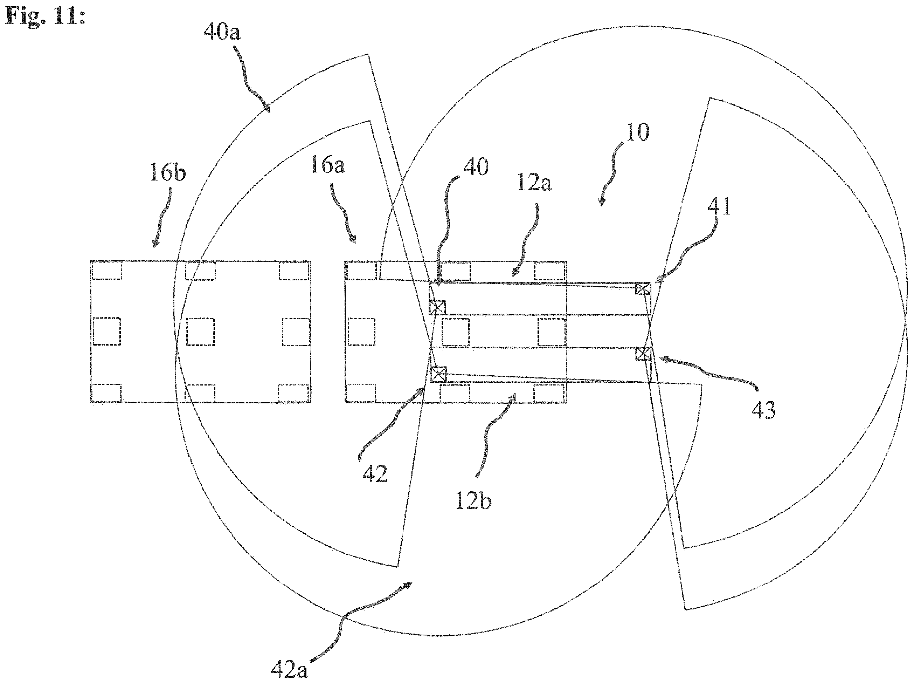

Fig. 11 zeigt eine Draufsicht auf eine Fördereinrichtung (10) der vorangegangenen Ausführungsbeispiele, welche aus zwei unabhängigen Fördereinheiten (12a, 12b) besteht und sich im Einfahrtprozess befindet, wobei sich ein Teil der Fördereinrichtung (10) schon unterhalb eines ersten Ladungsträgers (16a) geschoben hat. Im dargestellten Szenario sind zwei Ladungsträger (16b) hintereinander, mit einem gewissen Versatz, angeordnet. Sobald die Fördereinrichtung (10) beginnt den ersten Ladungsträger (16a) zu unterfahren, können die durch die Sensoreinheiten (40, 42) jeweils erfassten Umgebungsparameter derart ausgewertet werden, dass ermittelt werden kann, was auf den bereits unterfahrenen Ladungsträger (16a) folgt. In vorteilhaften Weiterbildungen kann auf Basis der durch die Sensoreinheiten (40, 42) detektierten Umgebungsparameter unterschieden werden, ob ein oder gegebenenfalls mehrere weitere Ladungsträger (16b) folgen. Im Falle des in Fig. 11 dargestellten Szenarios, würde der zweite Ladungsträger (16b) erkannt werden. In anderen Szenarien ist es aber denkbar, dass auf Basis der erfassten Umgebungsparameter auch festgestellt werden kann, wenn kein weiterer Ladungsträger folgt und/oder eine Wand bzw. ein Hindernis folgt und somit eine Weiterfahrt, wenn überhaupt, nur eingeschränkt möglich ist. Im Falle der Erkennung eines weiteren Ladungsträgers (16b) kann insbesondere erkannt werden, in welchem Abstand und in welcher Orientierung sich der folgenden Ladungsträger (16b) im Verhältnis zur eigenen Position und Orientierung der Fördereinrichtung (10) befindet.

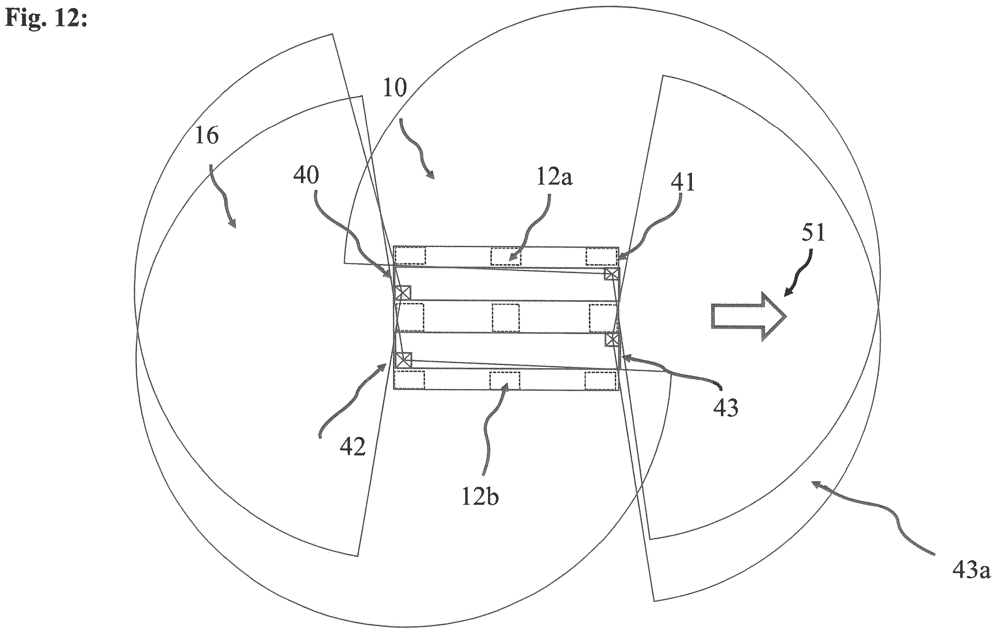

Fig. 12 zeigt eine Draufsicht auf eine Fördereinrichtung (10), welche aus zwei unabhängigen Fördereinheiten (12a, 12b) besteht und sich im Transportprozess unterhalb des Ladungsträgers (16) befindet. Die Detektionsbereiche der Sensoreinheiten (40, 41 ,42 ,43) sind derart ausgerichtet, dass sie knapp an der jeweiligen anderen Fördereinheit vorbeilaufen. Im vorliegenden Ausführungsbeispiel zeigt der Pfeil (51), welcher die Fahrtrichtung symbolisiert, nach rechts. Somit sind die Sensoreinheiten (40, 42) der Fahrtrichtung abgewandten Seite zugeordnet und sorgen für die gegenseitige Absicherung.

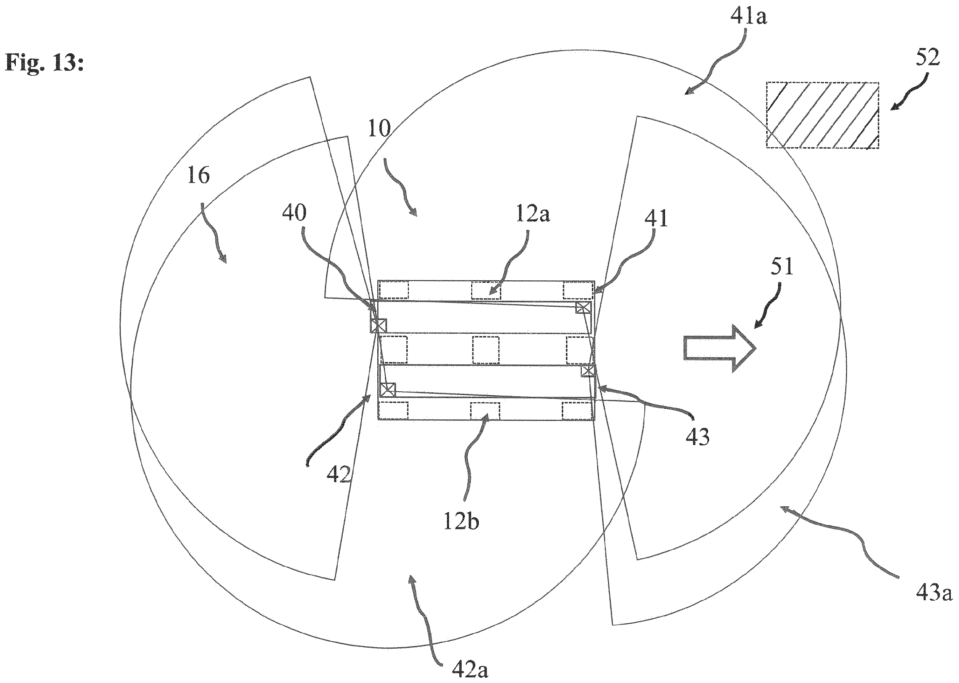

Fig. 13 zeigt eine Draufsicht auf eine Fördereinrichtung (10), wie sie bereits in Fig. 12 dargestellt ist. Die Fördereinrichtung (10) besteht aus zwei unabhängigen Fördereinheiten (12a, 12b) und befindet sich im Transportprozesses unterhalb des Ladungsträgers (16). Jedoch wurde in diesem Fall eine anstehende Kollision mit Hindernis (52) durch eine Detektionsbereichsverletzung (41a) erkannt und eine Notbremsung ausgelöst. Das Hindernis (52) soll schematisch eine Person darstellen, welche auf Kollisionsweg mit dem Fahrweg der Fördereinrichtung (16) liegt. Nach erfolgter Bremsung der ersten Fördereinheit (12a), detektiert nun die hintere Sensoreinheit (42) der zweiten Fördereinheit (12b) eine Kollision durch eine Verletzung des Detektionsbereichs (42a). Die Verletzung des Detektionsbereichs (42a) wird durch die stehende erste Fördereinheit (12a), welche sich nunmehr in Detektionsbereichs (42a) der Sensoreinheit (42) der zweiten Fördereinheit (12b) befindet, ausgelöst. Die zweite Fördereinheit (12b) löst dementsprechend ebenfalls eine Bremsung aus und kommt zum Stehen. Das Gesamtsystem wurde aufgrund einer detektierten Kollisionsgefahr zum Stillstand gebracht.

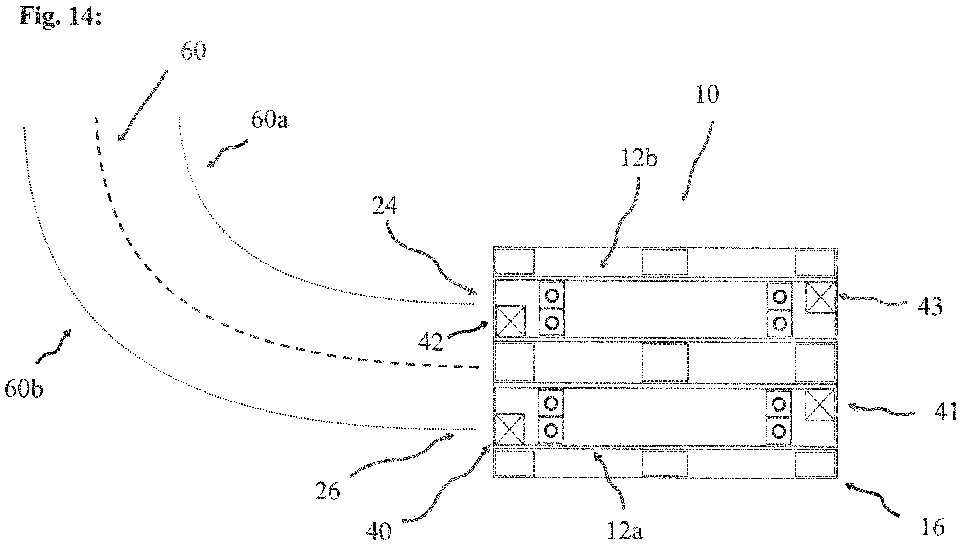

Fig. 14 zeigt die Fördereinrichtung (10) schematisch von oben. Die Fördereinrichtung (10) besteht aus zwei Fördereinheiten (12), die sich jeweils in den Freilichträumen (24, 26) unterhalb des Ladungsträgers (16) befinden. Bei einem gegeben Förderauftrag wird den beiden Fördereinheiten (12) jeweils mindestens der Zielort des Ladungsträgers (16) und die Relativposition des Ladungsträgers (16) im Raum drahtlos mitgeteilt. Anhand ihrer jeweiligen Positionen innerhalb des Ladungsträgers (16) kann jede Fördereinheit (12) die Bahnkurve (60) des Ladungsträgers (16), sowie ihre jeweilige eigene Bahnkurve (60a, 60b) berechnen. In jedem Fall ist die Bahnkurve des Ladungsträgers (16) entscheidend und kann als Master-Bahnkurve angesehen werden. Des Weiteren sind die jeweiligen Sensoreinheiten (40, 41) und (42, 43) von den jeweiligen Fördereinheiten (12) dargestellt.

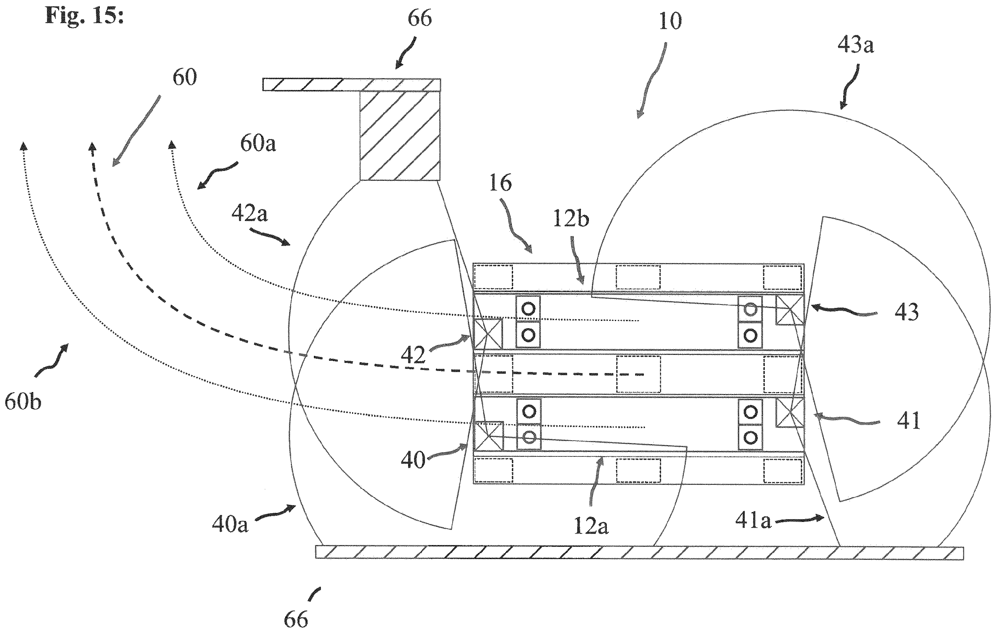

Fig. 15 entspricht einer perspektivischen Draufsicht auf die Fördereinrichtung (10), wie sie auch in Fig. 14 dargestellt ist. In dieser Darstellung ist ebenfalls die Fördereinrichtung (10) und ein Ladungsträger (16) zu sehen, welche entlang der Bahnkurve (60) verfahren möchte. Die Fördereinheiten (12a, 12b) sind mit den jeweiligen Sensoreinheiten (40, 41) und (42, 43) dargestellt, welche jeweils einen Erfassungsbereich (40a, 41a, 42a, 43a) haben. Anhand umliegender Objekte (66) kann die eigene Lage genau erfasst werden, und somit zur Positionskorrektur der jeweiligen Bahnkurve (60a, 60b) relativ zur Master-Bahnkurve (60) verwendet werden.

Eine andere vorteilhafte Ausführung wäre gegebenen, wenn die Fördereinheit (12a, 12b) sich unterhalb des Ladungsträgers (16) zusätzlich, neben der Gewichtskraft des Ladungsträgers (16) und der Ladung, kraftschlüssig verbinden und somit auch bei geringer Last auf dem Ladungsträger (16) eine starre Verbindung bewirken. Eine Relativbewegung zwischen der Fördereinrichtung (10) und dem Ladungsträger (16) wäre somit nahezu ausgeschlossen. Insbesondere könnte die kraftschlüssige Verbindung durch ein Festklemmen unterhalb des Ladungsträgers realisiert werden.

In einer besonders vorteilhaften Ausführung des Fördersystems und deren Steuerungsverfahren werden beide Methoden, zu einem das Festklemmen unterhalb des Ladungsträgers (16) zur Minimierung der Relativbewegung, zum anderen die Erfassung von Objekten (66) im Umfeld zur Ist-Positionierung, angewandt.

Bei besonders vorteilhafter Ausführung des Antriebsystems (30) sind die Bodenrollen der Fördereinheiten (12) frei drehbar. Gemäß dem bisher vorgestellten Ausführungsbeispiel der Fördereinrichtung (10) sind daher insgesamt acht Antriebseinheiten, jeweils vier Antriebseinheiten in jeder Fördereinheit (12), vorhanden.

Das Ausführungsbeispiel der Fördereinrichtung (10), kombiniert mit dem Steuerungsverfahren nach dem vierten Aspekt, ermöglicht komplexe, nicht-gradlinige Bahnkurven.

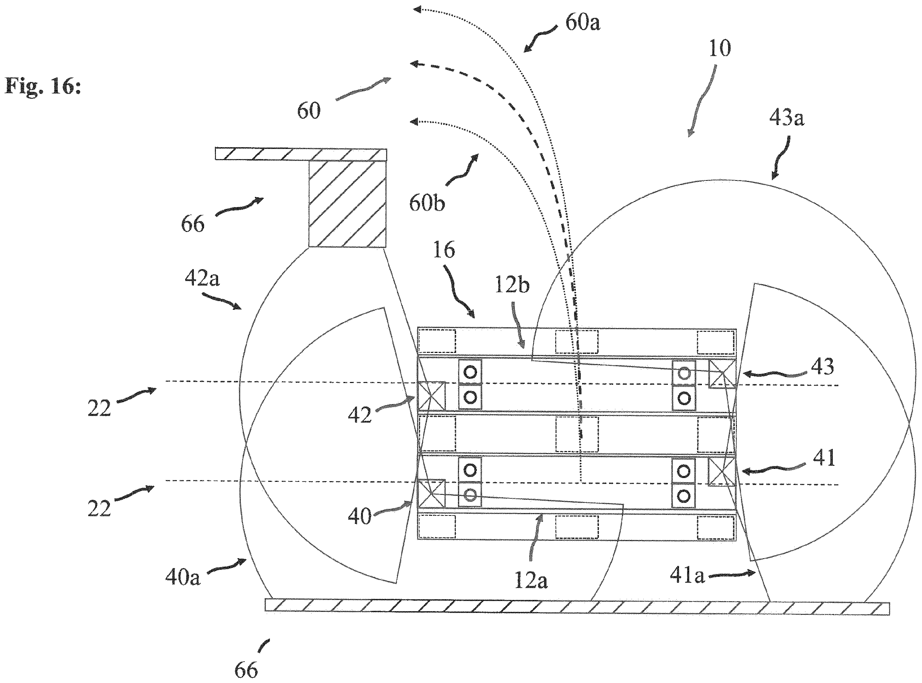

Fig. 16 entspricht einer perspektivischen Draufsicht von oben auf die Fördereinrichtung (10), wie sie auch in Fig. 15 dargestellt ist. In dieser Darstellung ist ebenfalls die Längsachse (22) jeder Fördereinheit (12a, 12b) eingezeichnet. In dieser Situation hat das Steuerungsverfahren, beispielsweise aufgrund anderer Bodenrollenausrichtungen, insbesondere jener, in welchem alle Bodenrollen senkrecht zu Längsachse (22) ausgerichtet sind, eine andere Bahnkurve (60) zum Fördern des Ladungsträgers (12) vorgegeben.

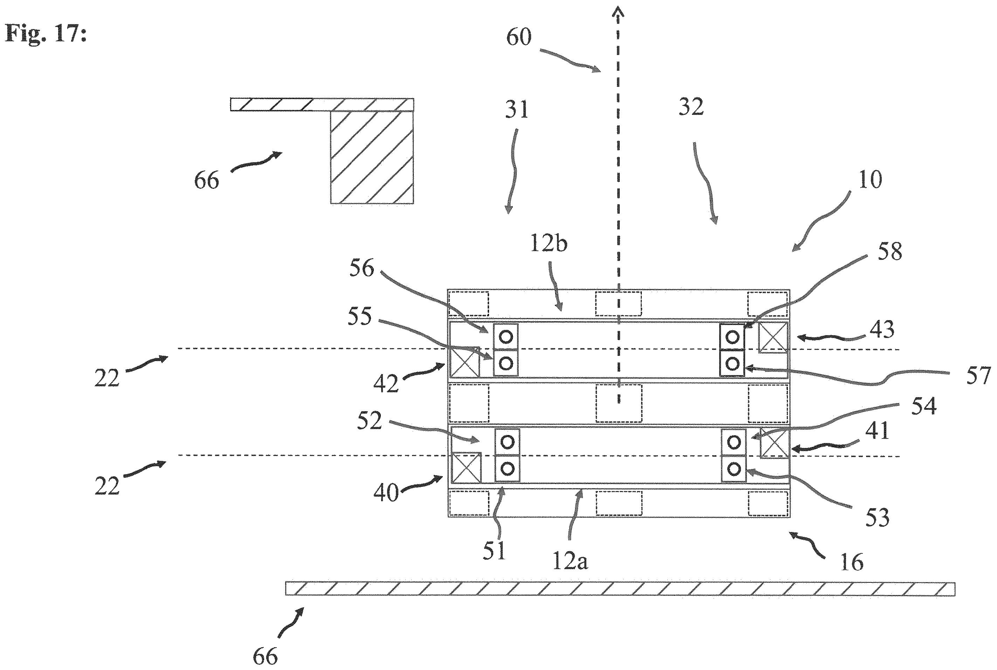

Fig. 17 zeigt eine schematische Draufsicht auf eine Fördereinrichtung (10), welche sich senkrecht zu der Längsachse (22) bewegen möchte. Da jedoch ein dauerhaftes Fördern in diese Fahrtrichtung aufgrund geringerer Kippstabilität nicht erwünscht ist, muss eine Drehung eingeleitet werden. In bekannten Steuerungsverfahren wird dies durch eine Drehung auf der Stelle gelöst. Es sind die Antriebseinheiten (51-54) der ersten Fördereinheit (12), sowie die Antriebseinheiten (55-58) der zweiten Fördereinheit (12) eingezeichnet. Zum tieferen Verständnis sind in diesem Fall die Antriebseinheiten bezogen auf die Fördereinheit (12) gruppiert. Die Antriebseinheiten (51, 52, 55, 56) bilden die, in dieser dargestellten, beispielhaften Situation, linke Antriebseite (31) der Fördereinrichtung (10), wohingegen die Antriebseinheiten (53, 54, 57, 58) die rechte Antriebsseite (32) der Fördereinrichtung (10) bilden.

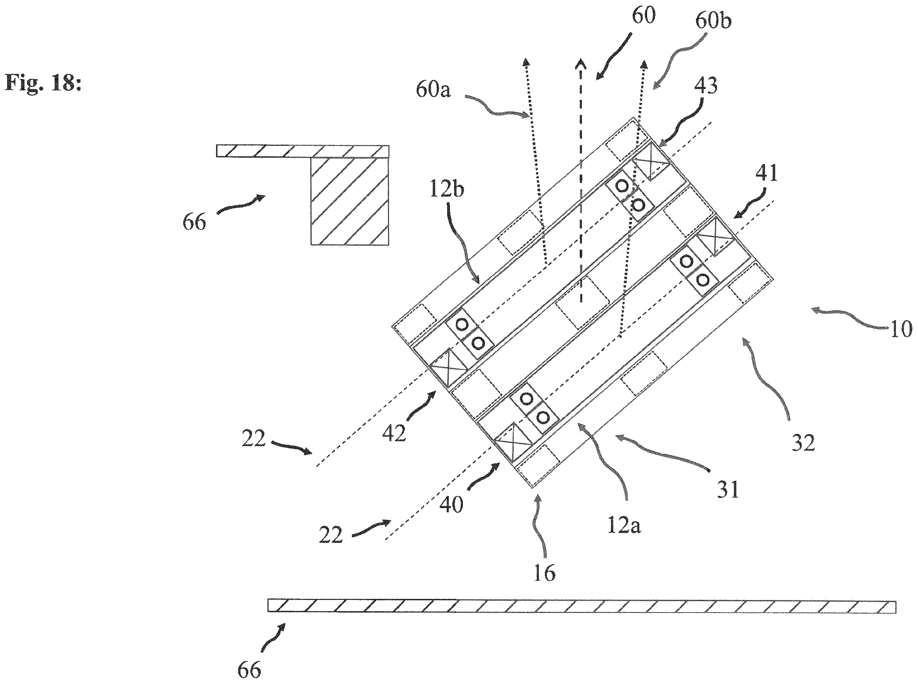

Fig. 18 zeigt eine schematische Draufsicht auf eine Fördereinrichtung (10), welche sich nun, ausgehend von der in Fig. 17 dargestellten Situation, in Bewegung befindet. Die Drehung der Fördereinheit (12) wurde derart eingeleitet, dass alle Antriebseinheiten der rechten Antriebsseite (32) eine erhöhte Raddrehzahl aufweisen, verglichen zu den Antriebseinheiten der linken Antriebsseite (31). Aufgrund der beispielhaften Drehung der Fördereinrichtung (10) lassen sich die individuellen Bahnkurven (60a) und (60b) der einzelnen Fördereinheiten (12) einzeichnen. Dies entspricht einer Überlagerung von zwei Bewegungen, namentlich einer translatorischen Bewegung und einer rotatorischen Bewegung.

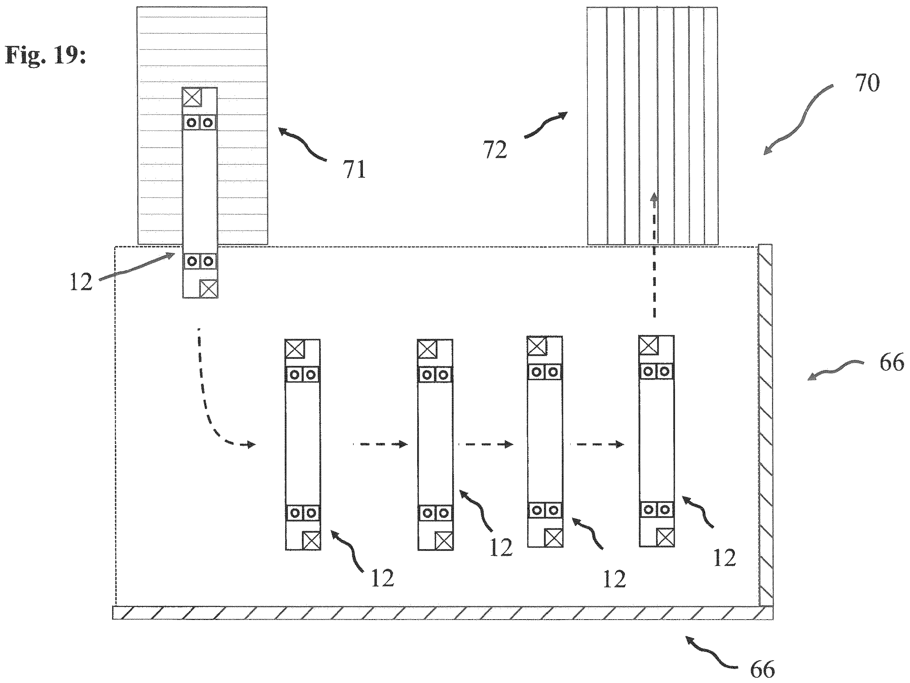

Fig. 19 zeigt eine schematische Draufsicht auf eine Wartezone (70). Die Wartezone (70) hat mindestens einen Stellplatz für eine Fördereinheit (12), bei vorteilhafter Ausführung für mehrere Fördereinheiten (12). Die Wartezone (70) ist bestenfalls umrandet von Objekten (66), die die Wartezone begrenzen. Beispielsweise könnten die Objekte (66) in Form von Barrieren ausgeprägt sein. Alternativ kann eine Wartezone (70) auch ohne jegliche Umrandung mittels Objekten (66), oder nur mit Teilumrandungen ausgebildet sein. Die Objekte (66) sind zur Begrenzung der Wartezone (70) folglich nicht zwingend erforderlich. Des Weiteren besitzt eine Wartezone (70) einen Einfahrtsbereich (71), quer schraffiert, und einen Ausfahrtsbereich (72), längs schraffiert, über welchen die Fördereinheiten (12) in die Wartezone (70) eintreten oder die Wartezone (70) verlassen können. Ferner ist denkbar, dass die Fördereinheiten (12) innerhalb der Wartezone aufgeladen werden.

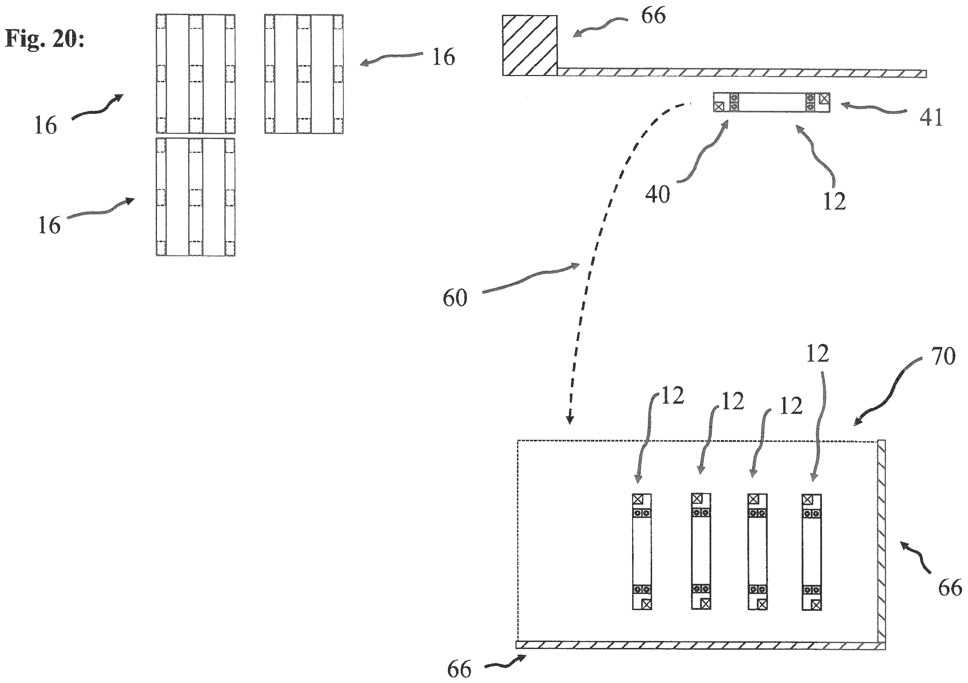

Fig. 20 zeigt eine schematische Draufsicht auf einen Lagerbereich, in welchem drei Ladungsträger (16), eine Wartezone (70) mit vier Fördereinheiten (12) und eine freie, beispielweise auf dem Rückweg befindliche, Fördereinheit (12) dargestellt sind. Die Bahnkurve (60) zeigt den geplanten Rückweg der Fördereinheit (12).

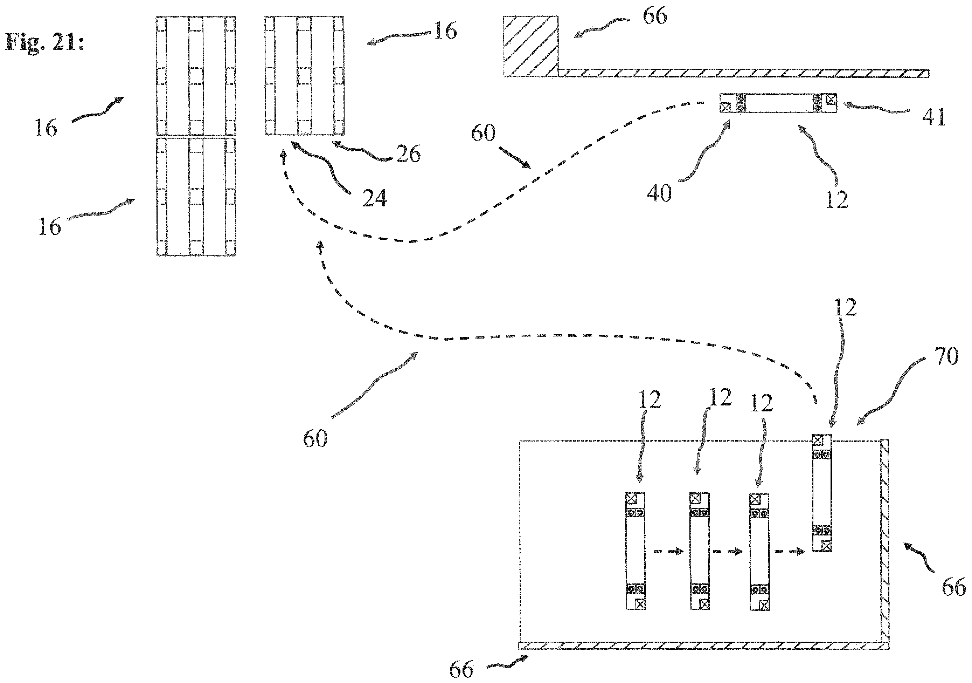

Fig. 21 zeigt ebenfalls den Lagerbereich, aus einer der in der Fig. 20 gezeigten Perspektive, bei dem nun das Fördersystem mit einem neuen Förderauftrag beauftragt worden ist. In diesem Fall wählt das Steuerungsverfahren zwei Fördereinheiten (12) aus, welche den Förderauftrag durchführen sollen. Die auf dem Rückweg befindliche Fördereinheit (12), sowie eine Fördereinheit (12) aus der Wartezone (70) werden hierfür ausgewählt. Ein weitergebildetes Steuerungsverfahren könnte allerdings aufgrund eines geringen Energiestatus der sich auf dem Rückweg befindlichen Fördereinheit (12), trotz der geringen Distanz zum Ladungsträger (16), auf deren Einsatz verzichten und zum Durchführen des Förderauftrags die ersten der beiden Fördereinheiten (12) aus der Wartezone (70) wählen. In diesem Fall würde die auf dem Rückweg befindliche Fördereinheit (12) zur Wartezone (70) zurückkehren und könnte dort aufgeladen werden.

Beide ausgewählten Fördereinheiten (12) fahren nun eigenständig in die vom Steuerungsverfahren bestimmte Förderposition in den Freileichtraum (24, 26) unter dem Ladungsträger (16). Spätestens beim Erreichen der Förderpositionen bilden die beiden Fördereinheiten (12) eine Fördereinrichtung (10).

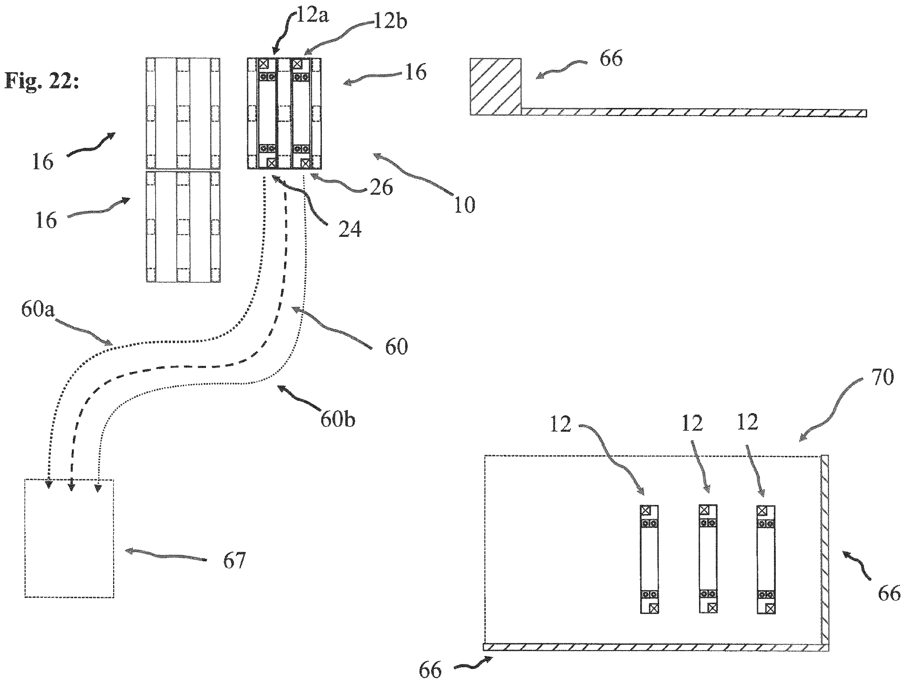

Fig. 22 zeigt ebenfalls den Lagerbereich, aus einer der in Fig. 20 gezeigten Perspektive. Die Fördereinheiten (12) befinden sich nun unterhalb des Ladungsträgers (16) und haben eine Fördereinheit (10) gebildet. Beide Fördereinheiten (12) bekommen drahtlos die Zielposition (67) des Ladungsträgers (16), sowie ihre Position innerhalb des Freilichtraumes (24, 26) vom nicht-dargestellten Steuerungsleitrechner zugeschickt, sodass nun beide Fördereinheiten (12) jeweils die eigenen Bahnkurve (60a, 60b), sowie die Bahnkurve (60) des Ladungsträgers berechnen können.

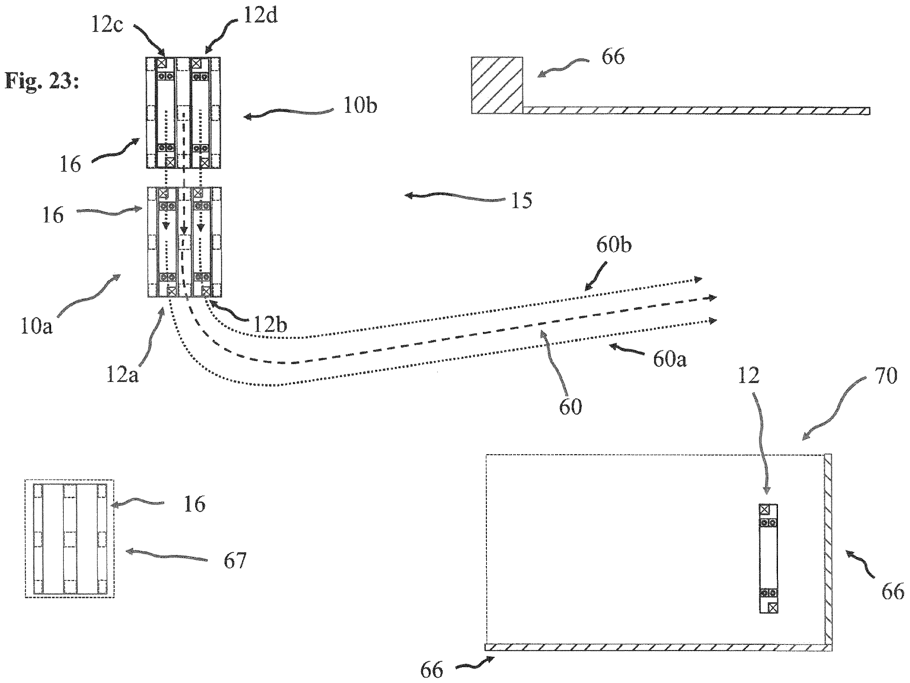

Fig. 23 zeigt ebenfalls in einer Draufsicht einen beispielhaften Lagerbereich. In der dargestellten Situation können zwei Förderaufträge derart ausgeführt werden, dass das Steuerungsverfahren die beiden Förderaufträge gemeinsam bearbeiten und eine vorteilhafte Kolonnenfahrt vorschlagen kann. In diesem Fall bilden die Fördereinrichtung (10a), bestehend aus den Fördereinheiten (12a, 12b), und die Fördereinrichtung (10b), bestehend aus den Fördereinheiten (12c, 12d), einen Förderkolonne (15). In dieser Förderkolonne (15) ist die nachfolgende Fördereinheit (10b) dazu bestrebt, der ersten, vorderen Fördereinheit (10a) auf der Bahnkurve (60) zu folgen. Bei einer vorteilhafter Ausführungsform des Steuerungsverfahrens wird dies dadurch ermöglicht, dass die Fördereinheiten (12c, 12d) der hinteren Fördereinrichtung (10b) Informationen zur besseren Folge ihrer Bahnkurven (60a) und (60b) drahtlos von Ihrer vorausfahrenden Fördereinrichtung (10a) empfangen. Das Ausführungsbeispiel des Steuerungsverfahrens würde, in der in Fig. 12 dargestellten Situation, die Fördereinheit (12a) der Fördereinheit (12c) und/oder die Fördereinheit (12b) der Fördereinheit (12d) Information zur besseren Folge der Bahnkurven (60a, 60b) zur Verfügung stellen. Diese Informationen können beispielsweise Informationen über Bodenunebenheiten und/oder stark variierende Reibwerte des Bodens sein.

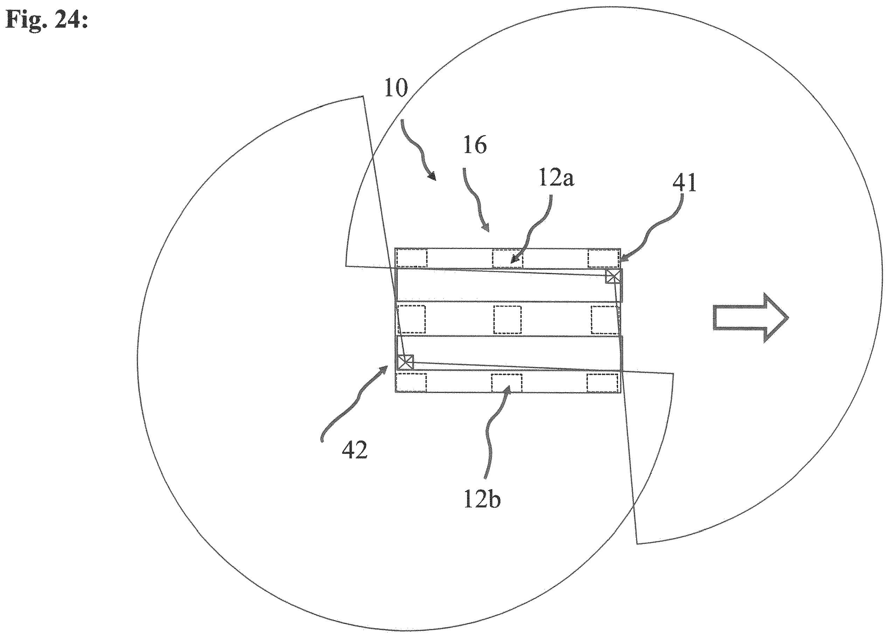

Fig. 24 zeigt eine Draufsicht auf eine Fördereinrichtung (10) gemäß eines zweiten Ausführungsbeispiels. Die Fördereinheit (10) besteht aus zwei unabhängigen Fördereinheiten (12a, 12b) und ist als kostengünstiges Ausführungsbeispiel ausgebildet. Vorteilhafterweise sind nur zwei Sensoreinheiten (41, 42) in der gesamten Fördereinrichtung (10) verbaut, nämlich eine Sensoreinheit pro Fördereinheit (12a, 12b). Die gegenseitige Absicherung erfolgt wie in der Beschreibung zu Fig. 13 erläutert. Je nach Fahrtrichtung und je nachdem welche Fördereinheit (12a, 12b) eine potentielle Kollision mit einem Hindernis detektiert, kann die Fördereinrichtung (10) sowohl durch eine aktive Detektionsbereichs als auch durch eine passive Detektionsbereichsverletzung gestoppt werden. Erkennt im dargestellten Ausführungsbeispiel die erste Fördereinheit (12a) eine potentielle Kollision mit einem Hindernis, wird sie ihre Geschwindigkeit reduzieren, oder einen ein Not-Stopp durchführen. Dies hat zur Folge, dass die erste Fördereinheit (12a) in den Erfassungsbereich der Sensoreinheit (42) der noch fahrenden zweiten Fördereinheit (12b) eindringt und dort zu einer aktiven Detektionsbereichsverletzung führt. Die zweite Fördereinheit (12b) wird ihre Geschwindigkeit entsprechend der ersten Fördereinheit (12a) anpassen und/oder ebenfalls einen Not-Stopp ausführen.

Im Umgekehrten Fall, nämlich wenn die zweite Fördereinheit (12b) ihre Geschwindigkeit reduziert und/oder einen Not-Stopp ausführt, wird dies zu einer passiven Detektionsbereichsverletzung bei der ersten Fördereinheit (12a) führen. Mit anderen Worten würde die zweite Fördereinheit (12b) durch die Verzögerung den Erfassungsbereich der ersten Sensoreinheit (41) der noch fahrenden ersten Fördereinheit (12a) verlassen. Mithin würde die erste Fördereinheit (12a) ihre Geschwindigkeit ebenfalls reduzieren und/oder einen Not-Stopp ausführen. In jedem Fall kommt die Fördereinheit (10) sicher zum Stehen.

### Bezugszeichenliste

- 10: Fördereinrichtung
- 10a: erste Fördereinrichtung
- 10b: zweite Fördereinrichtung
- 12: Fördereinheit
- 12a: erste Fördereinheit
- 12b: zweite Fördereinheit
- 16: Ladungsträger
- 17: Antriebseinheit
- 18: Tragelement
- 19: Detektionsebene
- 21: Boden
- 22: Längsachse einer Fördereinheit
- 24, 26: Freilichtraum des Ladungsträgers
- 25: Sensorsystem
- 30: Antriebssystem
- 40 - 43: Sensoreinheiten
- 40a - 43a: Erfassungsbereiche der jeweiligen Sensoreinheiten
- 51-54: Antriebseinheit
- 60: Bahnkurve der Fördereinrichtung
- 60a: Bahnkurve der ersten Fördereinheit
- 60b: Bahnkurve der zweiten Fördereinheit
- 66: Objekte
- 67: Zielposition

- α: Mindestdetektionswinkel
- β: Raumwinkelerfassungsbereich
- γ: Kippwinkel
- A: Grundfläche
- B: Fläche
- d: Abstand zwischen Boden und Detektionsebene
- h: Distanz zwischen der Oberkante des Ladungsträgers und der Detektionsebene

## Patentansprüche

1. Steuerungsverfahren für ein Fördersystem zum Fördern von beladenen und unbeladenen Ladungsträgern (16), in welchem mindestens zwei Fördereinheiten (12) eine Fördereinrichtung (10) bilden, wobei
- jede Fördereinheit (12) ein Fahrwerk, mindestens ein Tragelement (18), mindestens eine Hub-/Senkeinheit zum Heben und Senken des Tragelements, ein Sensorsystem (25) und mindestens ein Antriebsystem, welches mindestens eine Bodenrolle der Fördereinheit (12a, 12b) antreibt, umfasst,
**dadurch gekennzeichnet, dass**
- eine erste Fördereinheit (12a) und eine zweite Fördereinheit (12b), wenn Sie eine Fördereinrichtung (10) zum Fördern von einem Ladungsträger gebildet haben, jeweils ihre Ist-Position, bezogen auf ihre eigene Soll-Bahnkurve (60a, 60b), unabhängig voneinander korrigieren, wobei die Soll-Bahnkurve der jeweiligen Fördereinheit (12a, 12b) aus der Soll-Bahnkurve des Ladungsträgers (16) und relativ zu dieser bestimmt ist.

2. Steuerungsverfahren nach dem vorhergehenden Anspruch, **dadurch gekennzeichnet, dass** die Gleichstellung der Fördereinheiten (12) durch einen identischen Aufbau der Fördereinheiten (12) und eine zeitgleiche Korrektur der Ist-Position durch die Fördereinheiten (12) bewirkt wird, wobei die Korrektur der Ist-Position in jeder Fördereinheit (12) unabhängig von der Korrektur der Ist-Position der jeweils anderen Fördereinheit erfolgt.

3. Steuerungsverfahren nach einem der vorhergehenden Ansprüche, **dadurch gekennzeichnet, dass** das Sensorsystem (25) mindestens eine Sensoreinheit (41), insbesondere eine optische Sensoreinheit (41), umfasst und die Ist-Position der jeweiligen Fördereinheit (12a, 12b) anhand der durch die Sensoreinheit (41) detektierten Umgebungsparameter bestimmt wird.

4. Steuerungsverfahren nach einem der vorhergehenden Ansprüche, **dadurch gekennzeichnet, dass** das Sensorsystem (25) mehrere Sensoreinheiten (41, 42) umfasst und die Sensoreinheiten (41, 42) punktsymmetrisch zum Mittelpunkt (13) oder spiegelsymmetrisch zur Mittelachse (14) der jeweiligen Fördereinheit (12) angeordnet sind.

5. Steuerungsverfahren nach einem der vorhergehenden Ansprüche, **dadurch gekennzeichnet, dass** mehrere Ladungsträger (16) durch mehrere Fördereinrichtungen (10a, 10b) gleichzeitig befördert werden können und die mehreren Fördereinrichtungen (10a, 10b) ein Fördersystem bilden, insbesondere wobei die Ladungsträger (16) in einer Kolonnenfahrt befördert werden, wobei die Ladungsträger (16) durch mehrere hintereinander herfahrender Fördereinrichtungen (10) befördert werden, welche eine Fördereinheitsflotte bilden.

6. Steuerungsverfahren nach Anspruch 5, **dadurch gekennzeichnet, dass** eine nachfolgende Fördereinrichtung (10b) Informationen zum besseren folgen ihrer Bahnkurve (60) drahtlos von einer vorausfahrenden Fördereinrichtung (10a) empfängt.

7. Steuerungsverfahren nach einem der Ansprüche 5 und 6, **dadurch gekennzeichnet, dass** das Fördersystem einen Steuerungsleitrechner zur Steuerung der Fördereinrichtungen umfasst, insbesondere wobei die Fördereinheiten (12) orientierungsunabhängig angesteuert werden können und dass die einzelnen Fördereinheiten (12) von einem Steuerungsleitrechner unter anderem den Zielort und die Relativposition unterhalb des Ladungsträgers (16) empfangen, sodass die Fördereinheiten (12) jeweils die Bahnkurve (60) des Ladungsträgers (16), sowie ihre eigenen Bahnkurven (60a, 60b) berechnen können.

8. Steuerungsverfahren nach einem der vorhergehenden Ansprüche, **dadurch gekennzeichnet, dass** die Fahrparameter, der jeweiligen Fördereinheit (12), dadurch bestimmt werden, dass die jeweiligen Bahnkurven mittels differentieller Flachheit auf die Fahrparameter der Fördereinheiten umgerechnet werden.

9. Steuerungsverfahren nach einem der Ansprüche 5 bis 8, **dadurch gekennzeichnet, dass** die Fördereinheiten (12) für einen neuen Förderauftrag derart ausgewählt werden, dass der Zustand der Fördereinheiten (12) im gleichen Maße berücksichtigt wird wie die Distanz zum Ladungsträger (16), insbesondere der Zeit bis zum Erreichen des Ladungsträgers (16), wobei insbesondere der Zustand einer Fördereinheit (12) beispielsweise durch die Energiekapazität des Energieträgers, und/oder durch den Verschleiß der Fördereinheit (12) bestimmt ist.

10. Steuerungsverfahren nach einem der vorhergehenden Ansprüche, **dadurch gekennzeichnet, dass** die Relativbewegung zwischen dem Ladungsträger (16) und der Fördereinheit (12) für das Steuerungsverfahren vernachlässigbar ist, wenn sich die Fördereinheit (12) mit dem Ladungsträger (16) kraftschlüssig verbindet.

11. Steuerungsverfahren nach einem der vorhergehenden Ansprüche, **dadurch gekennzeichnet, dass** bei einer beabsichtigten Fahrt der Fördereinrichtung (10), senkrecht zur Längsachse (22) der Fördereinheiten (12), eine Drehung der Fördereinrichtung zum Fahren in Fahrtrichtung derart eingeleitet wird, dass die Antriebseinheiten auf einer Seite der Fördereinrichtung, beispielsweise der linken Antriebseite (31), eine Differenz der Radgeschwindigkeiten gegenüber der anderen Seite, beispielsweise der rechten Antriebseite (32) der Fördereinrichtung aufweisen.

12. Steuerungsverfahren nach einem der vorhergehenden Ansprüche, **dadurch gekennzeichnet, dass** das Steuerungsverfahren die Bodenrollenabstände der Antriebseinheiten (30) zueinander derart berücksichtigt, dass Bodenrollengeschwindigkeiten und Lenkungswinkel der Antriebsmodulen angepasst werden, sodass kein Schlupf entsteht.

13. Steuerungsverfahren nach einem der vorhergehenden Ansprüche, **dadurch gekennzeichnet, dass**
- die Fördereinheiten (12) funktional gleichgestellt sind, so dass jede einzelne Fördereinheit (12) den anderen Fördereinheiten (12) und/oder dem Steuerungsleitrechner Informationen, welche zur erhöhten Präzision des Abfahrens der jeweiligen Bahnkurven beitragen können, über ein Kommunikationskanal mitteilt;
- sich die Fördereinheiten (12) auf Basis der empfangenen Information eigenständig ihre jeweiligen Bahnkurven (60a, 60b) mittels Anpassung der Fahrparameter korrigieren;
- die Fördereinrichtungen (10) eines Fördersystems gleichgestellt sind; und/oder
- mehrere Fördereinheitsflotten innerhalb eines Fördersystems gleichgestellt sind.

14. Steuerungsverfahren nach einem der Ansprüche 6 bis 13, **dadurch gekennzeichnet, dass**
- für jede Fördereinheitsflotte ein weiterer Kommunikationskanal oder eine Spezifizierung im bestehenden Kommunikationskanal genutzt wird, so dass die Informationen einer Fördereinheit (12) der Fördereinheitsflotte, welche zur Genauigkeit des Transportauftrags relevant sein können, den anderen Fördereinheiten (12) der Fördereinheitsflotte zur Verfügung gestellt wird und jede andere Fördereinheit (12) der Fördereinheitsflotte auf diese Informationen zugreifen kann;
- gemäß Anspruch 13 über den Kommunikationskanal Informationen zur Verfügung gestellt werden und/oder die Informationen weiterverarbeitet werden, bevor sie in geänderter Form zur Verfügung gestellt werden, insbesondere wobei die Information einer Fördereinheit (12), bevor sie den anderen Fördereinheiten zur Verfügung gestellt werden, komprimiert werden, so dass eine Reduzierung der Auslastung des Kommunikationskanals bewirkt wird; und/oder
- die Informationen, welche über den Kommunikationskanal übermittelt werden, Header-Daten umfassen, welche zur Zuordnung der Informationen verwendet werden.

15. Fördereinrichtung (10) zum Fördern von beladenen oder unbeladenen Ladungsträgern, wobei mindestens zwei Fördereinheiten (12) eine Fördereinrichtung (10) bilden, wobei
- jede Fördereinheit (12) ein Fahrwerk, mindestens ein Tragelement (18), mindestens eine Hub-/Senkeinheit zum Heben und Senken des Tragelements, ein Sensorsystem (25) und mindestens ein Antriebsystem, welches mindestens eine Bodenrolle der Fördereinheit (12a, 12b) antreibt, umfasst,
**dadurch gekennzeichnet, dass**
- eine erste Fördereinheit (12a) und eine zweite Fördereinheit (12b), wenn Sie eine Fördereinrichtung (10) zum Fördern von einem Ladungsträger gebildet haben, jeweils ihre Ist-Position, bezogen auf ihre eigene Soll-Bahnkurve (60a, 60b), unabhängig voneinander korrigieren, wobei die Soll-Bahnkurve der jeweiligen Fördereinheit (12a, 12b) aus der Soll-Bahnkurve des Ladungsträgers (16) und relativ zu dieser bestimmt ist.

## Claims

1. A control method for a conveying device for conveying loaded and unloaded load carriers (16), in which at least two conveying units (12) form a conveying device (10), wherein
- each conveying unit (12) comprises a chassis, at least one support element (18), at least one lifting/lowering unit for raising and lowering the support element (18), a sensor system (25) and at least one drive system which drives at least one floor roller of the conveying unit (12a, 12b),
**characterised in that**
- a first conveying unit (12a) and a second conveying unit (12b), when they form a conveying device (10) for conveying a load carrier, each correct their actual position, relative to their own target trajectory curve (60a, 60b), independently of one another, wherein the target path curve of the respective conveying unit (12a, 12b) is determined from the target path curve of the load carrier (16) and relative to it.

2. The control method according to the preceding claim, **characterised in that** the alignment of the conveying units (12) is achieved by an identical configuration of the conveying units (12) and a simultaneous correction of the actual position by the conveying units (12), whereby the correction of the actual position in each conveying unit (12) takes place independently of the correction of the actual position of the other conveying unit.

3. The control method according to one of the preceding claims, **characterised in that** the sensor system (25) comprises at least one sensor unit (41), in particular an optical sensor unit (41), and the actual position of the respective conveying unit (12a, 12b) is determined on the basis of the environmental parameters detected by the sensor unit (41).

4. The control method according to one of the preceding claims, **characterised in that** the sensor system (25) comprises a plurality of sensor units (41, 42) and the sensor units (41, 42) are arranged point-symmetrically with respect to the centre point (13) or mirror-symmetrically with respect to the central axis (14) of the respective conveying unit (12).

5. The control method according to one of the preceding claims, **characterised in that** a plurality of load carriers (16) can be conveyed simultaneously by a plurality of conveying devices (10a, 10b) and the plurality of conveying devices (10a, 10b) form a conveying system, in particular wherein the load carriers (16) are conveyed in a column formation, wherein the load carriers (16) are conveyed by a plurality of conveying devices (10) travelling one behind the other, which form a fleet of conveying units.

6. The control method according to claim 5, **characterised in that** a following conveyor (10b) receives information wirelessly from a preceding conveyor (10a) to better follow its path curve (60).

7. The control method according to one of claims 5 and 6, **characterised in that** the conveying device comprises a control master computer for controlling the conveyors, in particular wherein the conveying units (12) can be controlled independently of their orientation, and **in that** the individual conveying units (12) receive, amongst other things, the destination and the relative position beneath the load carrier (16) from a master control computer, so that the conveying units (12) can each calculate the trajectory (60) of the load carrier (16) as well as their own trajectories (60a, 60b).

8. The control method according to one of the preceding claims, **characterised in that** the travel parameters of the respective conveying unit (12) are determined by converting the respective track curves into the travel parameters of the conveying units by means of differential flatness.

9. The control method according to any one of claims 5 to 8, **characterised in that** the conveying units (12) are selected for a new conveying task in such a way that the condition of the conveying units (12) is taken into account to the same extent as the distance to the load carrier (16), in particular the time taken to reach the load carrier (16), whereby, in particular, the condition of a conveying unit (12) is determined, for example, by the energy capacity of the energy source and/or by the wear and tear of the conveying unit (12).

10. The control method according to one of the preceding claims, **characterised in that** the relative movement between the load carrier (16) and the conveying unit (12) is negligible for the control method when the conveying unit (12) is connected to the load carrier (16) by a force-fit connection.

11. The control method according to any one of the preceding claims, **characterised in that**, during an intended journey of the conveyor device (10), perpendicular to the longitudinal axis (22) of the conveying units (12), rotation of the conveyor device in the direction of travel is initiated in such a way that the drive units on one side of the conveyor device, for example the left-hand drive side (31), exhibit a difference in wheel speeds compared with the other side, for example the right-hand drive side (32) of the conveyor device.

12. The control method according to any one of the preceding claims, **characterised in that** the control method takes into account the ground roller distances between the drive units (30) such that the ground roller speeds and steering angles of the drive modules are adjusted so that no slippage occurs.

13. The control method according to one of the preceding claims, **characterised in that**
- the conveying units (12) are functionally equivalent, such that each individual conveying unit (12) communicates information-which may contribute to increased precision in following the respective track curves-to the other conveying units (12) and/or the control master computer via a communication channel;
- the conveying units (12) autonomously correct their respective path curves (60a, 60b) on the basis of the information received by adjusting the travel parameters;
- the conveying units (10) of a conveying device are treated as equal; and/or
- several fleets of conveying units within a conveying device are treated as equivalent.

14. The control method according to any one of claims 6 to 13, **characterised in that**
- for each fleet of conveying units, a further communication channel or a specification within the existing communication channel is used, so that information from a conveying unit (12) within the conveying unit fleet, which may be relevant to the accuracy of the transport order, is made available to the other conveying units (12) in the conveying unit fleet, and each other conveying unit (12) in the conveying unit fleet can access this information;
- in accordance with claim 13, information is made available via the communication channel and/or the information is further processed before being made available in a modified form, in particular whereby the information from a conveying unit (12) is compressed before being made available to the other conveying units, thereby reducing the load on the communication channel; and/or
- the information transmitted via the communication channel comprises header data which is used to identify the information.

15. A conveying device (10) for conveying loaded or unloaded load carriers, wherein at least two conveying units (12) form a conveying device (10), wherein
- each conveying unit (12) comprises a chassis, at least one support element (18), at least one lifting/lowering unit for raising and lowering the support element, a sensor system (25) and at least one drive system which drives at least one floor roller of the conveying unit (12a, 12b),
**characterised in that**
- a first conveying unit (12a) and a second conveying unit (12b), when they form a conveying device (10) for conveying a load carrier, each correct their actual position, relative to their own target trajectory curve (60a, 60b), independently of one another, wherein the target path curve of the respective conveying unit (12a, 12b) is determined from the target path curve of the load carrier (16) and relative to it.

## Revendications

1. Procédé de commande d'un système de transport permettant de transporter des supports de charge chargés et non chargés (16), dans lequel au moins deux unités de transport (12) forment un dispositif de transport (10),
- chaque unité de transport (12) comprenant un châssis, au moins un élément porteur (18), au moins une unité de levage/abaissement destinée à lever et abaisser l'élément porteur, un système de détection (25) et au moins un système d'entraînement qui entraîne au moins une roulette au sol de l'unité de transport (12a, 12b),
**caractérisé en ce que**
- une première unité de transport (12a) et une deuxième unité de transport (12b), une fois qu'elles ont formé un dispositif de transport (10) pour transporter un porteur de charge, corrigent chacune indépendamment leur position réelle par rapport à leur propre courbe de trajectoire cible (60a, 60b), ladite courbe de trajectoire cible de l'unité de transport (12a, 12b) respective étant déterminée à partir de la courbe de trajectoire cible du porteur de charge (16) et relativement à celle-ci.

2. Procédé de commande selon la revendication précédente, **caractérisé en ce que** la parification des unités de transport (12) résulte d'une structure identique des unités de transport (12) et d'une correction simultanée de la position réelle par les unités de transport (12), ladite correction de la position réelle dans chaque unité de transport (12) étant indépendante de la correction de la position réelle de l'autre unité de transport associée.

3. Procédé de commande selon l'une des revendications précédentes, **caractérisé en ce que** le système de détection (25) comprend au moins une unité de détection (41), notamment une unité de détection optique (41), et la position réelle de l'unité de transport (12a, 12b) respective est déterminée compte tenu des paramètres environnementaux détectés par l'unité de détection (41).

4. Procédé de commande selon l'une des revendications précédentes, **caractérisé en ce que** le système de détection (25) comprend plusieurs unités de détection (41, 42) et les unités de détection (41, 42) sont disposées en symétrie ponctuelle par rapport au point central (13) ou en symétrie spéculaire par rapport à l'axe central (14) de l'unité de transport (12) associée.

5. Procédé de commande selon l'une des revendications précédentes, **caractérisé en ce que** plusieurs supports de charge (16) peuvent être transportés simultanément par plusieurs dispositifs de transport (10a, 10b) et lesdits plusieurs dispositifs de transport (10a, 10b) forment un système de transport, lesdits supports de charge (16) étant notamment transportés en colonne, les supports de charge (16) étant transportés par plusieurs dispositifs de transport (10) successifs qui forment une flotte d'unités de transport.

6. Procédé de commande selon la revendication 5, **caractérisé en ce qu'**un dispositif de transport ultérieur (10b) reçoit sans fil des informations provenant d'un dispositif de transport précédent (10a) lui permettant de mieux suivre sa courbe de trajectoire (60).

7. Procédé de commande selon l'une des revendications 5 et 6, **caractérisé en ce que** le système de transport comprend un ordinateur de commande destiné à commander les dispositifs de transport, lesdites unités de transport (12) pouvant notamment être commandées indépendamment de leur orientation, et **en ce que** les unités de transport (12) individuelles reçoivent entre autres, d'un ordinateur de commande, la destination et la position relative sous le support de charge (16), permettant à chacune des unités de transport (12) de calculer la courbe de trajectoire (60) du support de charge (16), ainsi que sa propre trajectoire (60a, 60b).

8. Procédé de commande selon l'une des revendications précédentes, **caractérisé en ce que** les paramètres de déplacement de l'unité de transport (12) respective sont déterminés par conversion des courbes de trajectoire respectives en paramètres de déplacement des unités de transport à l'aide de la planéité différentielle.

9. Procédé de commande selon l'une des revendications 5 à 8, **caractérisé en ce que** les unités de transport (12) sont choisies pour une nouvelle tâche de transport de telle façon que l'état des unités de transport (12) est pris en compte dans la même mesure que la distance les séparant du porteur de charge (16), notamment le temps nécessaire pour atteindre le porteur de charge (16), l'état d'une unité de transport (12) étant notamment déterminé, par exemple, par la capacité énergétique du porteur et/ou par l'usure de l'unité de transport (12).

10. Procédé de commande selon l'une des revendications précédentes, **caractérisé en ce que** le mouvement relatif entre le support de charge (16) et l'unité de transport (12) est négligeable pour le procédé de commande lorsque l'unité de transport (12) est raccordée au support de charge (16) par adhérence.

11. Procédé de commande selon l'une des revendications précédentes, **caractérisé en ce que**, lorsque le dispositif de transport (10) est destiné à se déplacer perpendiculairement à l'axe longitudinal (22) des unités de transport (12), il est engagé une rotation du dispositif de transport en vue d'un déplacement dans le sens du déplacement de telle façon que les unités d'entraînement d'un côté du dispositif de transport, par exemple du côté d'entraînement gauche (31), aient une différence de vitesse de roue par rapport à l'autre côté, par exemple le côté d'entraînement droit (32), du dispositif de transport.

12. Procédé de commande selon l'une des revendications précédentes, **caractérisé en ce que** le procédé de commande tient compte des écarts entre roulettes au sol des unités d'entraînement (30) de telle façon que les vitesses des roulettes au sol et les angles de direction des modules d'entraînement sont ajustés afin qu'aucun glissement ne se produise.

13. Procédé de commande selon l'une des revendications précédentes, **caractérisé en ce que**
- les unités de transport (12) sont fonctionnellement parifiées, de telle façon que chaque unité de transport individuelle (12) communique, par le biais d'un canal de communication, des informations aux autres unités de transport (12) et/ou à l'ordinateur de commande, lesquelles permettent de contribuer à la précision accrue du suivi des trajectoires respectives,
- les unités de transport (12) corrigent indépendamment leur trajectoire (60a, 60b) respective en fonction des informations reçues, par ajustement des paramètres de déplacement,
- les dispositifs de transport (10) d'un système de transport sont parifiés, et/ou
- plusieurs flottes d'unités de transport sont parifiées au sein d'un même système de transport.

14. Procédé de commande selon l'une des revendications 6 à 13, **caractérisé en ce que**
- pour chaque flotte d'unités de transport, il est utilisé un canal de communication supplémentaire ou une spécification réalisée dans le canal de communication existant, de telle façon que les informations d'une unité de transport (12) de la flotte d'unités de transport, qui peuvent être pertinentes pour l'exactitude de la tâche de transport, sont mises à la disposition des autres unités de transport (12) de la flotte d'unités de transport et que chaque autre unité de transport (12) de la flotte d'unités de transport peut avoir accès à ces informations,
- selon la revendication 13, des informations sont mises à disposition par le biais du canal de communication et/ou les informations subissent un traitement avant d'être mises à disposition sous une forme modifiée, lesdites informations d'une unité de transport (12) étant notamment compressées afin de réduire l'utilisation du canal de communication avant d'être mises à la disposition des autres unités de transport, et/ou
- les informations transmises par le biais du canal de communication comprennent des données d'en-tête permettant d'affecter lesdites informations.

15. Dispositif de transport (10) pour le transport de supports de charge chargés ou non chargés, au moins deux unités de transport (12) formant un dispositif de transport (10),
- chaque unité de transport (12) comprenant un châssis, au moins un élément porteur (18), au moins une unité de levage/abaissement destinée à lever et abaisser l'élément porteur, un système de détection (25) et au moins un système d'entraînement qui entraîne au moins une roulette au sol de l'unité de transport (12a, 12b),
**caractérisé en ce que**
- une première unité de transport (12a) et une deuxième unité de transport (12b), une fois qu'elles ont formé un dispositif de transport (10) pour transporter un porteur de charge, corrigent chacune indépendamment leur position réelle par rapport à leur propre courbe de trajectoire cible (60a, 60b), ladite courbe de trajectoire cible de l'unité de transport (12a, 12b) respective étant déterminée à partir de la courbe de trajectoire cible du porteur de charge (16) et relativement à celle-ci.
